# EUROPEAN PATENT SPECIFICATION

(11) **EP 2 514 101 B1**
(45) Date of publication and mention of the grant of the patent: **01.01.2020**
(21) Application number: 10837789.6
(22) Date of filing: 19.11.2010
(51) Int. Cl.: H04B 1/40, G06F 17/28, H04W 4/02, G06F 17/27, H04L 12/58, H04W 4/18

(54) **MOBILE TERMINAL AND CONTROL METHOD THEREOF**
MOBILES ENDGERÄT UND STEUERUNGSVERFAHREN DAFÜR
TERMINAL MOBILE ET PROCÉDÉ DE COMMANDE DE CE DERNIER

(30) Priority: 16.12.2009 KR 20090125721
(43) Date of publication of application: 24.10.2012
(73) Proprietor: LG Electronics Inc., Seoul 150-721 (KR)
(72) Inventor: BANG, Kyuseop, Gyeonggi-Do 411-740 (KR)
(74) Representative: Vossius & Partner Patentanwälte Rechtsanwälte mbB
(86) International application number: PCT/KR2010/008211
(87) International publication number: WO 2011/074792

(56) References cited:
- WO-A1-2006/082506
- KR-A- 20020 010 226
- KR-A- 20050 020 911
- KR-A- 20070 113 931
- KR-A- 20080 086 790
- KR-A- 20090 042 601
- US-A1- 2008 036 586
- US-A1- 2008 132 199

## Description

### Technical Field

Some exemplary embodiments of the present disclosure relate to a mobile terminal and its control method.

### Background Art

In general, a mobile terminal is a device for performing a global positioning system (GPS) function and a call function to provide corresponding performing results to a user.

Document KR 2007 011 393 1 A1 discloses a mobile communications terminal configured to extract a telephone number or email-address from a multimedia message.

Document KR 2008 008 679 0 A discloses a voice recognition circuit for transforming voice signal to a text message.

Document WO 2006/082506 A1 discloses a mobile station configured to initiate a text message based on information extracted from an email received by the mobile station.

### Disclosure of Invention

### Solution to Problem

According to an aspect of the present disclosure, there is provided a method for controlling a mobile terminal, as defined according to the appended independent claim 1.

According to another aspect of the present disclosure, there is provided a mobile terminal, as defined according to the appended independent claim 5.

Furthermore, advantageous embodiments are set out in the appended dependent claims.

The foregoing and other objects, features, aspects and advantages of the present disclosure will become more apparent from the following detailed description of the present disclosure when taken in conjunction with the accompanying drawings.

### Advantageous Effects of Invention

An aspect of the exemplary embodiments provides a mobile terminal and a control method thereof capable of automatically extracting a user desired key word from already retained information, and transmitting the already retained information and/or additional information related to the extracted information to a certain terminal or performing various functions based on the extracted information, thus improving user convenience.

An aspect of the exemplary embodiments provides a mobile terminal and a control method thereof capable of extracting information regarding a person's name, a particular place (the name of a place), time, and the like, included in a text message according to natural language processing, and performing a phone book search function, a road guide information generation function, a route search function, an alarm setting function, and the like, by using the extracted information regarding the name of the person, the particular place, the time, and the like, thus providing various functions by using the already retained information.

An aspect of the exemplary embodiments provides a mobile terminal and a control method thereof capable of performing a voice recognition with respect to a voice message, extracting information regarding the person's name, a particular place (the name of a place), time, and the like, included in the voice message (or a text message corresponding to the voice message) according to natural language processing, and performing a phone book search function, a road guide information generation function, a route search function, an alarm setting function, and the like, by using the extracted information regarding the name of the person, the particular place, the time, and the like, thus extending the application field of the mobile terminal.

### Brief Description of Drawings

The accompanying drawings, which are included to provide a further understanding of the invention and are incorporated in and constitute a part of this specification, illustrate embodiments of the invention and together with the description serve to explain the principles of the invention.

In the drawings:
FIG. 1 is a schematic block diagram showing the configuration of a mobile terminal according to an exemplary embodiment;
FIG. 2 is a schematic block diagram showing the configuration of a telematics terminal according to an exemplary embodiment;
FIG. 3 is a schematic block diagram showing the configuration of a mobile terminal system according to an exemplary embodiment;
FIG. 4 is a schematic block diagram showing the configuration of a mobile terminal according to an exemplary embodiment;
FIG. 5 is a schematic block diagram showing the configuration of a second mobile terminal according to an exemplary embodiment;
FIG. 6 is a flow chart showing a method for controlling a mobile terminal according to a first exemplary embodiment;
FIGS. 7A to 7C are overviews of display screens of a display unit according to an exemplary embodiment;
FIG. 8 is a flow chart showing a control method of a mobile terminal according to a second exemplary embodiment;
FIG. 9 is a flow chart showing a control method of a mobile terminal according to a third exemplary embodiment;
FIGS. 10A to 10D are overviews of display screens of a display unit according to an exemplary embodiment;
FIG. 11 is a flow chart showing a control method of a mobile terminal according to a fourth exemplary embodiment;
FIGS. 12A to 12C are overviews of display screens of a display unit according to an exemplary embodiment;
FIG. 13 is a flow chart showing a control method of a mobile terminal according to a fifth exemplary embodiment;
FIGS. 14A to 14B are overviews of display screens of a display unit according to an exemplary embodiment;
FIG. 15 is a flow chart showing a control method of a mobile terminal according to a sixth exemplary embodiment;
FIG. 16 is a flow chart showing a control method of a mobile terminal according to a seventh exemplary embodiment;
FIGS. 17A to 17C are overviews of display screens of a display unit according to an exemplary embodiment; and
FIG. 18 is a flow chart showing a control method of a mobile terminal according to an eighth exemplary embodiment.

### Mode for the Invention

Exemplary embodiments of the present disclosure will now be described with reference to the accompanying drawings, in which the same reference numerals are used for the same or corresponding elements and repeated description therefor will be omitted.

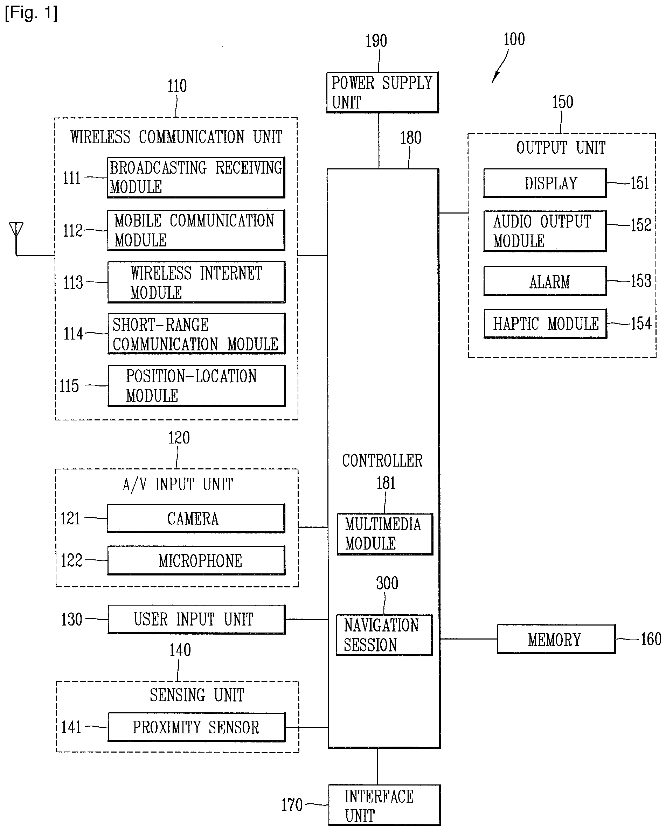

FIG. 1 is a schematic block diagram of a mobile terminal 100 according to an exemplary embodiment.

The mobile terminal 100 may be implemented in various forms such as mobile phones, smart phones, notebook computers, digital broadcast terminals, PDAs (Personal Digital Assistants), PMPs (Portable Multimedia Player), navigation devices (vehicle navigation devices), or other devices.

As shown in FIG. 1, the mobile terminal 100 includes a wireless communication unit 110, an A/V (Audio/Video) input unit 120, a user input unit 130, a sensing unit 140, an output unit 150, a memory 160, an interface unit 170, a controller 180, and a power supply unit 190. The configuration of FIG. 1 is exemplary, as the mobile terminal 100 may be include greater or fewer components.

The wireless communication unit 110 can include one or more components providing functionality for radio communication between the mobile terminal 100 and a wireless communication system or a network in which the mobile communication terminal is located. For example, the wireless communication unit may include at least one of a broadcast receiving module 111, a mobile communication module 112, a wireless Internet module 113, a short-range communication module 114, and a location information module 115.

The broadcast receiving module 111 receives broadcast signals and/or broadcast associated information from an external broadcast management server (or other network entity) via a broadcast channel. The broadcast channel may include a satellite channel and/or a terrestrial channel. The broadcast management server may be a server that generates and transmits a broadcast signal and/or broadcast associated information or a server that receives a previously generated broadcast signal and/or broadcast associated information and transmits the same to a terminal. The broadcast associated information may refer to information associated with a broadcast channel, a broadcast program or a broadcast service provider. The broadcast signal may include a TV broadcast signal, a radio broadcast signal, a data broadcast signal, or another signal. Also, the broadcast signal may further include a broadcast signal combined with a TV or radio broadcast signal.

The broadcast associated information also may be provided via a mobile communication network and, in this case, the broadcast associated information may be received by the mobile communication module 112. The broadcast signal may exist in various forms. For example, broadcast associated information may be implemented according to various formats, such as an electronic program guide (EPG) of a digital multimedia broadcasting (DMB) broadcast or an electronic service guide (ESG) of a digital video broadcast-handheld (DVB-H) broadcast.

The broadcast receiving module 111 may be configured to receive signals broadcast using various types of broadcast systems. In particular, the broadcast receiving module 111 may receive a digital broadcast using a digital broadcast system such as a multimedia broadcasting-terrestrial (DMB-T) system, a digital multimedia broadcasting-satellite (DMB-S) system, a digital video broadcast-handheld (DVB-H) system, a data broadcasting system such as media forward link only (MediaFLO?), an integrated services digital broadcast-terrestrial (ISDB-T) system, or other broadcast system. The broadcast receiving module 111 may be configured to be suitable for broadcast systems that provide a broadcast signal as well as the above-mentioned digital broadcast systems. Broadcast signals and/or broadcast-associated information received via the broadcast receiving module 111 may be stored in the memory 160.

The mobile communication module 112 may transmit and receive radio signals to and from at least one of a base station (e.g., access point, Node B, etc.), an external terminal (e.g., other user devices) and a server (or other network entities). Such radio signals may include a voice call signal, a video call signal or various types of data associated with text and/or multimedia message transmission and/or reception. The wireless Internet module 113 supports wireless Internet access for the mobile communication terminal. This module may be internally or externally coupled to the terminal. The wireless Internet protocol used can include, for example, a wireless local area network (WLAN), Wi-Fi, wireless broadband (WiBro), world interoperability for microwave access (WiMAX), high speed downlink packet access (HSDPA), and the like.

The short-range communication module 114 is a module for supporting short range communications. Some examples of short-range communication technology include Bluetooth™, Radio Frequency Identification (RFID), Infrared Data Association (IrDA), Ultra-WideBand (UWB), and ZigBee™.

The location information module 115 is a module for identifying or acquiring a location (or position) of the mobile communication terminal or vehicle in which the mobile communication terminal is located. For example, the location information module 115 may be embodied using a GPS module that receives location information from a plurality of satellites. Here, the location information may include coordinate information represented by latitude and longitude values. For example, the GPS module may measure time and distance with respect to three or more satellites so as to accurately calculate a current location of the mobile terminal 100 according to trigonometry based on the measured time and distances. A method of acquiring distance and time information from three satellites and performing error correction with a single satellite may be used. In particular, the GPS module may acquire time and three-dimensional speed information as well as latitude, longitude, and altitude from the location information received from the satellites. In some implementations, a Wi-Fi position system and/or hybrid positioning system may be used as the location information module 115.

The A/V input unit 120 is configured to receive an audio or video signal. The A/V input unit 120 may include a camera 121 and a microphone 122. The camera 121 processes image data of still pictures or video obtained by an image capture device in a video capturing mode or an image capturing mode. The processed image frames may be displayed on a display unit 151 (or other visual output device). The image frames processed by the camera 121 may be stored in the memory 160 (or other storage medium) or transmitted via the wireless communication unit 110. Two or more cameras 121 may be provided according to the configuration of the mobile communication terminal.

The microphone 122 may receive sounds (audible data) via a microphone (or the like) in a phone call mode, a recording mode, a voice recognition mode, or other modes and can process the received sounds into audio data. In implementations using mobile telephone systems, the processed audio data may be converted for output into a format transmittable to a mobile communication base station (or other network entity) via the mobile communication module 112. The microphone 122 may implement various types of noise canceling (or suppression) algorithms to cancel (or suppress) noise or interference generated in the course of receiving and transmitting audio signals.

The user input unit 130 may generate key input data from commands entered by a user to control various operations of the mobile terminal 100. The user input unit 130 allows the user to enter various types of information, and may include a keypad, a dome switch, a touch pad (e.g., a touch sensitive member that detects changes in resistance, pressure, capacitance, etc. due to being contacted) a jog wheel, a jog switch, or other input mechanisms. In particular, when the touch pad is overlaid on the display unit 151 in a layered manner, it may form a touch screen.

The sensing unit 140 detects a current status (or state) of the mobile terminal 100, such as an opened or closed state of the mobile terminal 100, a location of the mobile terminal 100, the presence or absence of user contact with the mobile terminal 100 (i.e., touch inputs), the orientation of the mobile terminal 100, or an acceleration or deceleration movement and direction of the mobile terminal 100 so as to generate commands or signals for controlling the operation of the mobile terminal 100. For example, when the mobile terminal 100 is implemented as a slide type mobile phone, the sensing unit 140 may sense whether the slide phone is opened or closed. In addition, the sensing unit 140 can detect whether or not the power supply unit 190 supplies power or whether or not the interface unit 170 is coupled with an external device. The sensing unit 140 may include a proximity sensor 141.

The output unit 150 is configured to provide outputs in a visual, audible, and/or tactile manner (e.g., audio signal, video signal, alarm signal, or vibration signal). The output unit 150 may include the display unit 151, an audio output module 152, an alarm unit 153, a haptic module 154, or other components.

The display unit 151 may output information processed in the mobile terminal 100. For example, when the mobile terminal 100 is in a phone call mode, the display unit 151 may display a User Interface (UI) or a Graphic User Interface (GUI) associated with a call or other communication (such as text messaging or multimedia file downloading). When the mobile terminal 100 is in a video call mode or image capturing mode, the display unit 151 may display a captured image and/or a received image, a UI or GUI that shows videos or images and functions related thereto. The display unit 151 may include at least one of a Liquid Crystal Display (LCD), a Thin Film Transistor-LCD (TFT-LCD), an Organic Light Emitting Diode (OLED) display, a flexible display, or a three-dimensional (3D) display. In some implementations, a display of the display unit 151 is configured to be transparent or light-transmissive to allow viewing of the exterior. A transparent display may be, for example, a TOLED (Transparent Organic Light Emitting Diode) display. Through such configuration, the user can view an object positioned at the rear side of the terminal body through the region occupied by the display unit 151 of the terminal body.

The mobile terminal 100 may include two or more display units (or other display means) according to its particular desired functionality. For example, a plurality of display units may be separately or integrally disposed on one surface of the mobile terminal, or may be separately disposed on mutually different surfaces. When the display unit 151 and a sensor (referred to as a 'touch sensor' or 'touch screen,' hereinafter) for detecting a touch operation are overlaid in a layered manner to form a touch screen, the display unit 151 may function as both an input device and an output device. The touch sensor may, for example, have a form of a touch film, a touch sheet, a touch pad, or a touch panel. In some cases, touch sensors (or touch screens) can operate without an actual physical contact. For example, touch screens operating on changed capacitance or other electrical characteristics may operate by the nearby presence of a finger or object with or without physical contact with the screen. As such, a "touch screen" may not actually require a touch for operation.

The touch sensor may be configured to convert pressure applied to a particular portion of the display unit 151 or a change in the capacitance or other electrical characteristic at a particular portion of the display unit 151 into an electrical input signal. The touch sensor may be configured to detect the pressure when a touch is applied, as well as the touched position and area. When there is a touch input with respect to the touch sensor, a corresponding signal is transmitted to a touch controller (not shown). The touch controller processes the signals and transmits corresponding data to the controller 180. Accordingly, the controller 180 may recognize which portion of the display unit 151 has been touched.

The proximity sensor 141 may be disposed within or near the touch screen. The proximity sensor 141 is a sensor for detecting the presence or absence of an object relative to a certain detection surface or an object that exists nearby using the force of electromagnetism or infrared rays without a physical contact. Thus, the proximity sensor 141 can have a considerably longer life span than a contact type sensor and can be utilized for various purposes. Examples of the proximity sensor 141 may include a transmission type photoelectric sensor, a direct reflection type photoelectric sensor, a mirror-reflection type photo sensor, an RF oscillation type proximity sensor, a capacitance type proximity sensor, a magnetic proximity sensor, and an infrared proximity sensor. If the touch screen is a capacitance type touch screen, proximity of the pointer can be detected by a change in electric field according to the proximity of the pointer. In this case, the touch screen may be classified as a proximity sensor.

In the following description, for the sake of brevity, recognition of the pointer positioned to be close to the touch screen will be called a 'proximity touch', while recognition of actual contacting of the pointer on the touch screen will be called a 'contact touch'. In this case, when the pointer is in the state of the proximity touch, it means that the pointer is positioned to correspond vertically to the touch screen. By employing the proximity sensor 141, a proximity touch and a proximity touch pattern (e.g., a proximity touch distance, a proximity touch speed, a proximity touch time, a proximity touch position, or a proximity touch movement state) can be detected, and information corresponding to the detected proximity touch operation and the proximity touch pattern can be outputted to the touch screen.

The audio output module 152 may convert and output sound from audio data received from the wireless communication unit 110 or stored in the memory 160 in various modes. The modes may include a call signal reception mode, a call mode, a record mode, a voice recognition mode, a broadcast reception mode, or other modes. Also, the audio output module 152 may provide audible outputs related to a particular function executed by the mobile terminal 100 (e.g., a call signal reception sound or a message reception sound). The audio output module 152 may include a speaker, a buzzer, or other sound generating device.

The alarm unit 153 may provide outputs to inform a user about the occurrence of an event of the mobile terminal 100. Typical events may include receipt of a call, receipt of a message, or received key or touch input. In addition to audio or video outputs, the alarm unit 153 may provide outputs in a different manner to inform the user about the occurrence of an event. For example, the alarm unit 153 may provide an output in the form of vibration (or other tactile or sensible output). In particular, when a call, a message, or some other incoming communication is received, the alarm unit 153 may provide tactile output (i.e., vibration) to inform the user thereof. By providing such tactile output, the user can recognize the occurrence of various events even if his mobile phone is in the user's pocket. Output informing about the occurrence of an event can also be provided via the display unit 151 or the audio output module 152. The display unit 151 and the audio output module 152 may be classified as a part of the alarm unit 153.

A haptic module 154 generates various tactile effects the user may feel. A typical example of the tactile effects generated by the haptic module 154 is vibration. The strength and pattern of the haptic module 154 can be controlled. For example, different vibrations may be combined to be outputted or sequentially outputted. Besides vibration, the haptic module 154 may generate various other tactile effects. The generated effects can include stimulation with a pin arrangement moving vertically with respect to a contact skin, a spray force or suction force of air through a jet orifice or a suction opening, a contact on the skin, a contact of an electrode, electrostatic force, and the sense of cold or warmth using an element that can absorb or generate heat. In addition, the haptic module 154 may be implemented to allow the user to feel a tactile effect through a muscle sensation such as fingers or arm of the user, as well as transferring the tactile effect through a direct contact. Two or more haptic modules 154 may be provided according to the configuration of the mobile terminal 100.

The memory 160 may store software programs used for the processing and controlling operations performed by the controller 180, or may temporarily store data (e.g., a phonebook, messages, still images, or video) that are inputted or outputted. In addition, the memory 160 may store data regarding various patterns of vibrations and audio signals outputted when a touch is inputted to the touch screen.

The memory 160 can be implemented using any type of suitable storage medium, such as, for example, a Flash memory, a hard disk, a multimedia card micro type memory, a card-type memory (e.g., SD or DX memory, etc), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, or an optical disk. Also, the mobile terminal 100 may be operated in relation to a web storage device that performs the storage function of the memory 160 over the Internet.

The interface unit 170 serves as an interface with external devices connected with the mobile terminal 100. For example, the interface unit 170 may transmit data to an external device, receive data from an external device, receive and transmit power to each element of the mobile terminal 100, or transmit internal data of the mobile terminal 100 to an external device. For example, the interface unit 170 may include wired or wireless headset ports, external power supply ports, wired or wireless data ports, memory card ports, ports for connecting a device having an identification module, audio input/output (I/O) ports, video I/O ports, and earphone ports.

The identification module may be a chip that stores various information for authenticating the authority of using the mobile terminal 100. This information may include a user identity module (UIM), a subscriber identity module (SIM) a universal subscriber identity module (USIM), or other information. In addition, the device having the identification module (referred to as 'identifying device', hereinafter) may take the form of a smart card. Accordingly, the identifying device may be connected with the mobile terminal 100 via a port. The interface unit 170 may be used to receive input (e.g., data, information, power, etc.) from an external device and transfer the received input to one or more elements within the mobile terminal 100 or may be used to transfer data between the mobile terminal and an external device.

When the mobile terminal 100 is connected with an external cradle, the interface unit 170 may serve as a passage to allow power from the cradle to be supplied there through to the mobile terminal 100 or may serve as a passage to allow various command signals inputted by the user from the cradle to be transferred to the mobile terminal there through. Various command signals or power inputted from the cradle may operate as signals for recognizing that the mobile terminal 100 is properly mounted on the cradle.

The controller 180 typically controls the general operations of the mobile terminal. For example, the controller 180 performs controlling and processing associated with voice calls, data communications, video calls, or other operations. The controller 180 may include a multimedia module 181 for reproducing multimedia data. The multimedia module 181 may be configured within the controller 180 or may be configured to be separated from the controller 180. Also, the controller 180 may perform a pattern recognition processing to recognize a handwriting input or a picture drawing input performed on the touch screen as characters or images, respectively.

The power supply unit 190 receives external power or internal power and supplies appropriate power required for operating respective elements and components under the control of the controller 180.

Various embodiments described herein may be implemented in a computer-readable medium using, for example, software, hardware, or a combination thereof. For hardware implementations, the embodiments described herein may be implemented using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, or other electronic units designed to perform the functions described herein. In some implementations, functionality may be implemented by the controller 180 itself.

For software implementations, the techniques described below may be implemented by separate software modules. Each software module may perform one or more functions or operations described herein. Software codes can be implemented by a software application written in any suitable programming language. The software codes may be stored in the memory 160 and executed by the controller 180. In addition, a navigation session 182 applied to the mobile terminal 100 provides a general navigation function.

Meanwhile, the controller 180 applied to the mobile terminal 100 according to an exemplary embodiment of the present disclosure may perform functions of extracting particular information included in a text/voice message or a voice-recognized text/ voice message, and searching a phone number, generating road guide information, search a route, setting an alarm (or generating alarm information), and the like, by using the information regarding a person's name, a name of a place, visual information, and the like, or the controller 180 may provide control to transmit the various types of generated information to a certain terminal corresponding to the searched phone number.

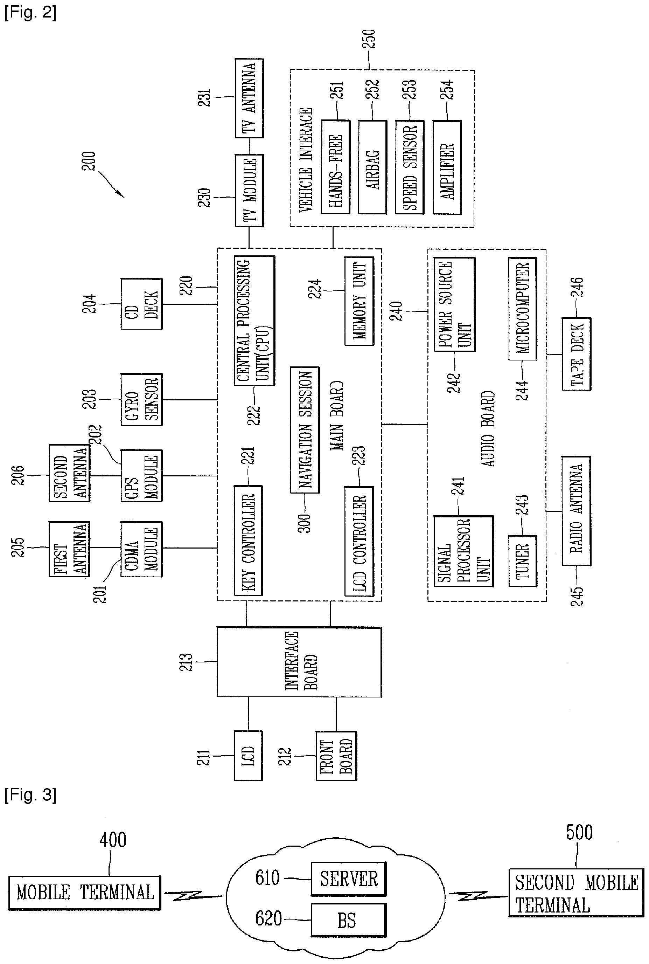

FIG. 2 is a block diagram showing a configuration of a telematics terminal 200. The telematics terminal 200 shows one exemplary configuration of a telematics terminal that may be used to carryout the functionality described in more detail below. In various implementations, a different configuration of a telematics terminal with other components may be used.

Referring to FIG. 2, the telematics terminal 200 may include a main board 220. The main board 220 includes a central processing unit (CPU) 222 for controlling overall operation of the telematics terminal 200, a key controller 221 for controlling a variety of key signals, an LCD controller 223 for controlling an LCD, and memory 224 for storing various kinds of information. In particular, the memory 224 stores map information (map data) for displaying vehicle guidance information (e.g., road guidance information for the user while the user is driving or not driving a vehicle) on a map of the display unit (e.g., LCD 211). In addition, the memory 224 stores a traffic information collection and control algorithm for allowing inputting of traffic information according to a present condition of a road on which the vehicle is currently traveling by a user.

The main board 220 may include a communication module 201 provided with a uniquely given device number. The communication module 201 may be configured to perform a voice call and data transmission and/or reception through a mobile terminal built in a vehicle and may include a GPS module 202 for receiving a GPS signal to guide a position of a vehicle, tracking a traveling route from a depart point to an arrival point, generating current position data of a vehicle based on the received GPS signal, or transmitting traffic information collected by a user as a GPS signal. The communication module 201 may also include a gyro sensor 203 for sensing a running direction of the vehicle, a CD deck 204 for reproducing a signal recorded on a compact disk (CD), and other modules. The communication module 201 and the GPS module 202 transmit and/or receive signals through a first antenna 205 and a second antenna 206, respectively.

The main board 220 is connected to a TV module 230 for receiving a broadcast signal via a broadcast signal antenna (or TV antenna). The main board 220 is connected to an LCD display unit 211 controlled by the LCD controller 223 via an interface board 213. The LCD 211 processes a broadcasting signal received through the TV module 230 and then displays the processed broadcasting signal, in the form of a video signal, on the LCD 211 via the interface board 213 under control of the LCD controller 223. In addition, the LCD 211 outputs an audio signal through an amplifier 254 under control of an audio board 240 and displays each kind of video signal or text signal based on control signals of the LCD controller 223. As discussed above, the LCD 211 may also be configured to receive an input from a user via a touch screen.

In addition, the main board 220 is connected to a front board 212 controlled by the key controller 221 via the interface board 213. The front board 212 configures buttons (or keys) and menus for enabling an input of a variety of key signals, and provides a key signal corresponding to the key (or button) selected by the user to the main board 220. The front board 212 may be provided with a menu key for allowing a direct input of traffic information, and the menu key may be configured to be controlled by the key controller 221.

The audio board 240 is connected to the main board 220, and processes a variety of audio signals. The audio board 240 may include a microcomputer 244 for controlling the audio board 240, a tuner 243 for receiving a radio signal through an antenna (or radio antenna) 245, a power supply unit 242 for supplying power to the microcomputer 244, and a signal processing unit 241 for processing a variety of voice signals. The audio board 240 is connected to a radio antenna 245 for receiving radio signals, and a tape deck 246 for reproducing an audio tape. The audio board 240 is connected to an amplifier 254 for outputting audio signals that are processed in the audio board 240.

The amplifier 254 is connected to a vehicle interface 250. That is, the main board 220 and the audio board 240 are connected to the vehicle interface 250. A hands-free unit 251 for inputting an audio signal without the user having to use their hands to input information, an airbag 252 for providing passenger's safety, and a speed sensor 253 for sensing a vehicle speed are also included in the vehicle interface 250. In addition, the speed sensor 253 calculates a vehicle speed, and provides information relating to the calculated vehicle speed to the CPU 222. The function of the navigation session 182 applied to the telematics terminal 200 can include general navigation functions, such as, providing driving directions to the user.

In addition, the speed sensor 253 calculates a speed, and provides information relating to the calculated speed to the CPU 222.

The functions of the navigation session 300 applied to the telematics terminal 200 provides general navigation functions.

Meanwhile, the CPU 222 applied to the telematics terminal 200 according to an exemplary embodiment of the present disclosure may perform functions of extracting particular information included in a text/voice message or a voice-recognized text/ voice message, and searching a phone number, generating road guide information, search a route, setting an alarm (or generating alarm information), and the like, by using the information regarding a person's name, a name of a place, visual information, and the like, or the CPU 222 may provide control to transmit the various types of generated information to a certain terminal corresponding to the searched phone number.

Hereinafter, it is assumed that a mobile terminal (mobile communication terminal) 400 is applied to the mobile terminal 100, this will be described in detail with reference to FIG. 3.

FIG. 3 is a schematic block diagram showing the configuration of a mobile terminal system according to an exemplary embodiment. As shown, a mobile terminal system 10 shown in FIG. 3 includes a mobile terminal 400, a server 610, a base station 620, and a second mobile terminal 500. Here, the mobile terminal 400 or the second mobile terminal 500 of FIG. 3 may be applied to various terminals such as a smart phone, a portable terminal, a mobile terminal, a personal digital assistant (PDA), a notebook computer, a Wibro terminal, an Internet protocol Television (IPTV) terminal, a telematics terminal, a navigation terminal, an audio video navigation (AVN) terminal, a television, an audio/video (A/V) system, a home theater system, and the like, as well as to the mobile terminal 100 and the telematics terminal 200.

The mobile terminal 400 is connected with the second mobile terminal 500 by using a wired/wireless communication scheme by the medium of the server 610 and/or the base station 620.

The mobile terminal 400 extracts pre-set particular information included in a received message (e.g., a text message) or the particular information included in a message corresponding to a voice recognition with respect to voice data (or a voice message) transmitted or received by users (or speakers) of the mobile terminal 400 and the second mobile terminal 500. In this case, the mobile terminal 400 may extract the particular information from the message by using a natural language processing function.

The mobile terminal 400 searches for a phone number by using a person's name included in the particular information based on the extracted particular information.

The mobile terminal 400 transmits the received message or the voice-recognized voice message (or a text message corresponding to the voice-recognized voice message) to the searched phone number.

The mobile terminal 400 generates road guide information by using a name of a place included in the particular information based on the extracted particular information.

The mobile terminal 400 performs route searching by using the name of a place included in the particular information based on the extracted particular information.

The mobile terminal 400 outputs the generated road guide information or the route search performing result according to the route searching.

The mobile terminal 400 sets an alarm function by using time information included in the particular information based on the extracted particular information, and performs a corresponding alarm function.

The mobile terminal 400 transmits the received message (or the voice-recognized voice message or the text message corresponding to the voice-recognized voice message) and/or one or more files to the searched phone number. In this case, the one or more files may include at least one of a file including the generated road guide information and a file including the generated alarm information.

The server 610 includes information providing center, a call center, and the like.

The server 610 transmits a call connection setup of the mobile terminal 400 or the second mobile terminal 500, traffic information (including TPEG information), various guide/control information, and the like, to the mobile terminal 400 or the second mobile terminal 500.

The base station (BS) 620 performs an interface function between the mobile terminal 400 (or the second mobile terminal 500) and a switching center, and controls and administers a cell area of responsibility in transmitting a termination or origination signal, designating a traffic channel, monitoring a traffic channel, a self-diagnosis function, and the like.

The second mobile terminal 500 is connected with the mobile terminal 400 by using a wired/wireless communication scheme by the medium of the server 610 and/or the base station 620.

The second mobile terminal 500 receives a message (text or voice message) and/or one or more files (or additional information) transmitted from the mobile terminal 400 and extracts pre-set particular information included in the received message.

The second mobile terminal 500 generates road guide information by using the name of a place included in the particular information based on the extracted particular information.

The second mobile terminal 500 performs route searching by using the name of a place included in the particular information based on the extracted particular information.

The second mobile terminal 500 outputs the generated road guide information or the route search performing result according to the route searching.

The second mobile terminal 500 sets an alarm function by using time information included in the particular information based on the extracted particular information, and performs a corresponding alarm function.

The second mobile terminal 500 signal-processes road guide information included in the one or more received files (e.g., the file including the road guide information, the file including alarm information, and the like), and outputs the signal-processed road guide information.

The second mobile terminal 500 sets an alarm function by using the alarm information included in the one or more received files, and performs the corresponding alarm function.

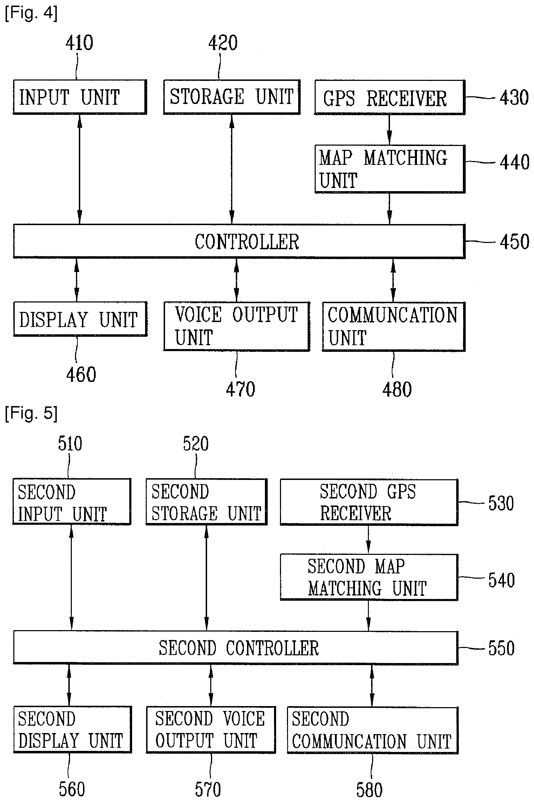

The configuration of the mobile terminal according to an exemplary embodiment will now be described with reference to FIG. 4.

FIG. 4 is a schematic block diagram showing the configuration of a mobile terminal according to an exemplary embodiment. As shown, the mobile terminal 400 includes an input unit 410, a storage unit 420, a GPS receiver 430, a map matching unit 440, a controller 450, a display unit 460, a voice output unit 470, and a communication unit 480.

The input unit 410 may receive a signal according to a user's button manipulation or a certain function selection, or receive a command or a control signal generated according to a manipulation, such as touching or scrolling a displayed screen image.

The input unit 410 may receive a signal corresponding to information inputted by the user. As the input unit 410, various devices, such as a keypad, a touch screen, a dome switch, a touch pad (static pressure/capacitance), a jog shuttle, a mouse, a stylus, a touch pen, and the like.

The input unit 410 may include a microphone (not shown) and/or a camera (not shown), and receive audio/voice information and/or video information (or image information) through the microphone and/or camera.

The storage unit 420 may store various user interfaces (UIs) and/or graphic user interfaces (GUIs).

The storage unit 420 may store a phone number of a particular user, and a name (a name, a nickname, and the like) corresponding to the phone number.

The storage unit 420 may store particular information. Here, the particular information may include a person's name, a name of a place, time information, and the like.

Further, when the user of the mobile terminal 400 performs a call function with a certain mobile terminal, the storage unit 420 stores a voice message transmitted or received during the call communication.

The storage unit 420 stores a speaker model of each speaker. In this case, the speaker model of each speaker may be stored together in association with a plurality of phone numbers previously stored in the storage unit 420 and information regarding the names (users) corresponding to the pertinent phone numbers. For example, the storage unit 420 stores information such as a speaker model, a corresponding phone number, a corresponding name, and the like, with respect to the speaker of the second mobile terminal 500.

The storage unit 420 may be configured to store a speaker model newly generated by the controller 450.

The storage unit 420 stores map data. In this case, the stored map data may include geographic coordinates (or longitude/latitude coordinates) representing the latitude and longitude by DMS (Degree/Minute/Second) unit. Here, besides the geographic coordinates, as the stored map data, universal transverse mercator (UTM) coordinates, universal polar system (UPS) coordinates, transverse mercator (TM) coordinates, and the like, may be also used as the stored map data.

The stored map data may include version information, and when it is updated to a new version of map data, the newly updated map data may include various types of information (including detailed information, supplementary information, additional information, and the like) regarding a newly added new road.

The storage unit 420 may store information regarding various menu screen images, point of interests (POI), and function characteristics information according to a particular location of the map data.

The storage unit 420 may store data (including various types of information, a control signal, and the like) transmitted from a server (including an information providing center, a call center, and the like) connected through wired/wireless communication, or transmitted from a certain mobile terminal.

The storage unit 420 may store data, programs, and the like, required for the mobile terminal 400 to operate.

The GPS receiver 430 may receive a GPS signal transmitted from a satellite, generate first location data of the mobile terminal 400 in real time based on longitude coordinates and/or latitude coordinates included in the received GPS signal, and may output the generated first location data to the map matching unit 440. The generated first location data is defined as a current location (or current location data) of the mobile terminal 400. The location data (location information) may be received through Wi-Fi or WiBro communication, as well as by the GPS receiver 430.

The signal received via the GPS receiver 430 may provide terminal location data to a mobile terminal 400 using a wireless communication scheme such as 802.11, a standard of the wireless network for WLAN including wireless LAN, some infrared communication, 802.15, a standard for a wireless personal area network (PAN) including Bluetooth™, UWB, ZigBee, 802.16, a standard for a wireless metropolitan area network (MAN) broadband wireless access (BWA) including a fixed wireless access (FWA), 802.20, and a standard for the mobile Internet with respect to a mobile broadband wireless access (MBWA) including WiBro, and WiMAX, proposed by the Institute of Electrical and Electronics Engineers (IEEE).

Further, a DR sensor (not shown) may measure a traveling direction and speed of the mobile terminal 400, generate second location data based on the measured traveling direction and speed of the mobile terminal 400, and output the generated second location data to the map matching unit 440.

The DR sensor may output the measured traveling direction and speed information of the mobile terminal 400 to the storage unit 420 and the controller 450.

The GPS receiver 430 configures a data collecting unit along with the DR sensor.

The map matching unit 440 may generate an estimated location of the mobile terminal 400 based on the first location data and the second location data, and read map data corresponding to a traveling route from the storage unit 420.

The map matching unit 440 matches the estimated location of the mobile terminal 400 to a link (road) included in the map data, and outputs the matched map information (i.e. the map matching results) to the controller 450. For example, the map matching unit 440 may generate the estimated location of the mobile terminal 400 based on the first location data and the second location data, match the generated estimated location of the mobile terminal 400 to links in the map data stored in the storage unit 420 according to the link order, and output the matched map information (i.e. the map matching results) to the controller 450.

The map matching unit 440 may output road attribute information, such as a single-storied road, a dual-storied road, and the like, included in the matched map information (map matching results) to the controller 450.

The function of the map matching unit 440 may be implemented in the controller 450.

The controller 450 executes general control functions of the mobile terminal 400.

The controller 450 extracts pre-set particular information included in the received message. Namely, the controller 450 may perform natural language processing on the received message to extract the particular information included in the message. Here, the particular information may include a person's name, a name of a place, time information, and the like.

The controller 450 may search a person's name included in the particular information among people corresponding to a plurality of phone numbers stored in the storage unit 420, and display the searched person's name on the display unit 460.

Further, when one person's name of the one or more names of the people displayed on the display unit 460 is selected, the controller 450 transmits the received message to a phone number corresponding to the selected person's name.

In addition, the controller 450 may generate road guide information by using the map data stored in the storage unit 420 and the name of a place included in the particular information based on the particular information.

The controller 450 checks a current location of the mobile terminal 400 and performs route searching based on the current location of the mobile terminal 400.

The controller 450 outputs the generated road guide information and the route search performing results via the display unit 460 and/or the voice output unit 470.

The controller 450 sets an alarm function by using time information included in the particular information based on the particular information, and performs the set alarm function.

Further, when the received message is transmitted to the phone number corresponding to the selected person's name, the controller 450 may transmit together additional information corresponding to the particular information. Here, the additional information corresponding to the particular information may include road guide information generated based on the name of a place included in the particular information and/or alarm information generated based on the time information included in the particular information.

The controller 450 may perform a voice recognition function with respect to the received voice signal.

Namely, the controller 450 extracts a feature vector from the received voice signal, and recognizes the speaker based on the extracted feature vector. In this case, the techniques of extracting the feature vector includes a linear predictive coefficient (LPC), cepstrum, mel frequency cepstral coefficients (MFCC), line spectral frequencies (LSF), a filter bank energy, and the like.

The controller 450 may calculate a probability value between the extracted feature vector and one or more speaker models stored in the storage unit 420, and perform a speaker identification to determine whether or not a speaker is a speaker stored in the storage unit 420 or perform a speaker verification to determine whether or not an access is an access of an authorized user, based on the calculated probability value.

Namely, the controller 450 selects a speaker model having the highest probability value as a speaker who has made the voice according to the results obtained by performing a maximum likelihood estimation on the plurality of speaker models stored in the storage unit 420. Also, when the highest probability value is smaller than or equal to the pre-set threshold value according to the maximum likelihood estimation performing results, the controller 450 may determine that there is no speaker who has made the voice among the speakers registered in the storage unit 420 and determine that the speaker, who has made the voice, is a speaker who has not been registered, according to the speaker recognition results.

In case of the speaker verification, the controller 450 discriminates whether or not a speaker is an authenticated speaker by using a log-likelihood ratio (LLR) method.

Further, when the speaker is a registered speaker according to the determination results, the controller 450 may adapt the extracted feature vector to a speaker model corresponding to the extracted feature vector stored in the storage unit 420.

Further, when the speaker is not a registered speaker according to the determination results, the controller 450 may generate a speaker model based on the extracted feature vector.

In this case, the controller 450 may generate the speaker model by using a Gaussian mixture model (GMM), a hidden markov model (HMM), a neural network, and the like.

The controller 450 may generate the GMM, the speaker model, by using an expectation maximization (EM) algorithm based on the extracted feature vector.

The controller 450 may generate a universal background model (UBM) by using the EM algorithm based on the extracted feature vector, and generate the speaker model, namely, the GMM, adapted to the voice-generated speaker by performing an adaptation algorithm previously stored in the storage unit 420. In this case, the adaptation algorithm stored in the storage unit 420 may include a maximum a posteriori (MAP), a maximum likelihood linear regression (MLLR), an eigenvoice method, and the like.

The controller 450 may extract the particular information included in the voice-recognized voice message (or the text message corresponding to the voice-recognized voice message).

The controller 450 may perform a function of searching for the written phone number, a rod guide information search function, a route search function, an alarm function setting and performing function, and the like, based on the particular information extracted with respect to the voice-recognized voice message.

The display unit 460 may display various contents such as various menu screen images, or the like, by using the user interface and/or the graphic user interface included in the storage unit 420 under the control of the controller 450. Here, the contents displayed on the display unit 460 may include a menu screen image including various types of text or image data (including map data or various types of information data), data such as an icon, a list menu, a combo box, and the like. Also, the display unit 460 may be a touch screen (including a static pressure/capacitance type).

The display unit 460 may display the generated road guide information or the route search performing results under the control of the controller 450.

The display unit 460 may display a screen image included in an alarm function according to performing of the alarm function under the control of the controller 450.

The voice output unit 470 may output voice information included in the signal processed by the controller 450. Here, the voice output unit 470 may be a speaker.

In addition, the voice output unit 470 may output the guide voice generated by the controller 450.

In addition, the voice output unit 470 may output the voice (or a voice message) included in the generated road guide information or the route search performing results under the control of the controller 450.

In addition, the voice output unit 470 may output a voice included in the alarm function according to the alarm function performing under the control of the controller 450.

The communication unit 480 may include a wireless Internet module or a short-range communication module. Here, the wireless Internet module may include a WLAN, Wi-Fi, WiBro, WiMAX, HSDPA, and the like, and the short-range communication module may include Bluetooth™, Radio Frequency IDentification (RFID), Infrared Data Association (IrDA), Ultra-WideBand (UWB), ZigBee™, and the like.

The configuration of the second mobile terminal according to an exemplary embodiment will now be described with reference to FIG. 5.

FIG. 5 is a schematic block diagram showing the configuration of the second mobile terminal according to an exemplary embodiment. As shown, the second mobile terminal 500 includes a second input unit 510, a second storage unit 520, a second GPS receiver 530, a second map matching unit 540, a second controller 550, a second display unit 560, a second voice output unit 570, and a second communication unit 580.

The second communication unit 580 may receive a message and/or additional information (or file) transmitted from a certain terminal connected for communication. Here, the additional information may include at least one of road guide information and alarm information.

The second controller 550 may extract particular information included in the message received via the second communication unit 580. In this case, the particular information may include a person's name, the name of a place, time information, and the like.

In addition, when the message received via the second communication unit 580 is a voice message, the second controller 550 may perform a voice recognition and extract the particular information included in the voice-recognized voice message.

In addition, the second controller 550 may generate road guide information or perform route searching based on the extracted particular information.

In addition, the second controller 550 may set an alarm function based on the particular information and perform the set alarm function.

In addition, the second controller 550 may signal-process the road guide information included in the received additional information, and output the signal-processed road guide information via the second display unit 560 and/or the second voice output unit 570.

In addition, the second controller 550 may set the alarm function of the second mobile terminal 500 by using the alarm information included in the received additional information, and perform the set alarm function.

In addition, a portion (or the entirety) of the second input unit 510, the second storage unit 520, the second GPS receiver 530, the second map matching unit 540, the second controller 550, the second display unit 560, the second voice output unit 570, and the second communication unit 580 may be implemented by the constituents having the similar function in the mobile terminal 400.

Namely, the second input unit 510 may be the input unit 410 of the mobile terminal 400, the second storage unit 520 may be the storage unit 420 of the mobile terminal 400, the second GPS receiver 530 may be the GPS receiver 430 of the mobile terminal 400, the second map matching unit 540 may be the map matching unit 440 of the mobile terminal 400, the second controller 550 may be the controller 450 of the mobile terminal 400, the second display unit 560 may be the display unit 460 of the mobile terminal 400, the second voice output unit 570 may be the voice output unit 470 of the mobile terminal 400, and the second communication unit 580 may be the communication unit 480 of the mobile terminal 400.

In this manner, the mobile terminal 400 automatically extracts a user desired key word from already retained information (voice message or text message), and transmits the additional information related to the already retained information and/or the extracted information to a certain terminal or performs various functions based on the extracted information, thus improving user convenience.

In addition, in this manner, the mobile terminal 400 extracts information regarding a person's name, a particular place (the name of a place), time, and the like, included in a text message according to natural language processing, and performs a phone book search function, a road guide information generation function, a route search function, an alarm setting function, and the like, by using the extracted information regarding the name of the person, the particular place, the time, and the like, thus providing various functions by using the already retained information.

In addition, in this manner, the mobile terminal 400 performs a voice recognition with respect to a voice message, extracts information regarding the person's name, a particular place (the name of a place), time, and the like, included in the voice message (or a text message corresponding to the voice message) according to natural language processing, and performs a phone book search function, a road guide information generation function, a route search function, an alarm setting function, and the like, by using the extracted information regarding the name of the person, the particular place, the time, and the like, thus extending the application field of the mobile terminal.

A method for controlling a mobile terminal according to an exemplary embodiment will now be described with reference to FIGS. 1 to 18.

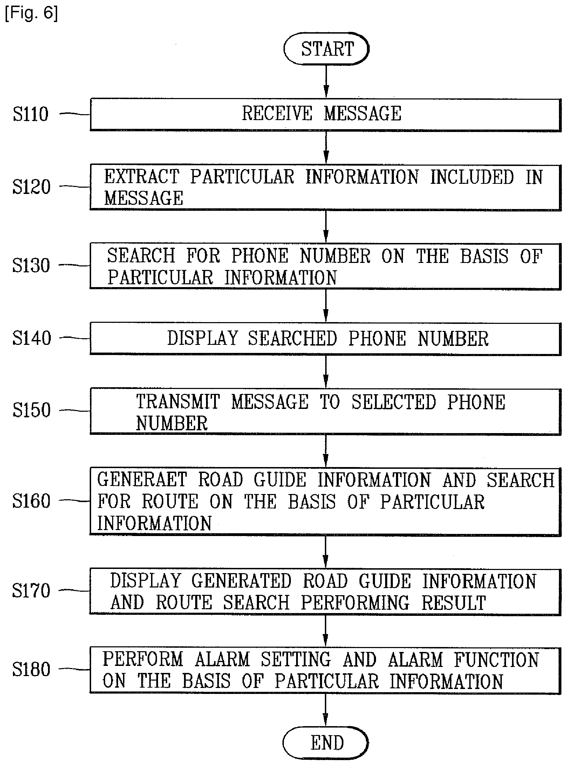

FIG. 6 is a flow chart showing the process of a method for controlling a mobile terminal according to a first exemplary embodiment.

First, the input unit 410 receives a message according to a user input (or corresponding to a user input). In this case, the display unit 460 may perform the function of the input unit 410. Namely, when the display unit 460 includes a touch screen function, it can receive a message corresponding to a user's touch input by using characters/ numbers/special characters/symbols, and the like, displayed on the display unit 460.

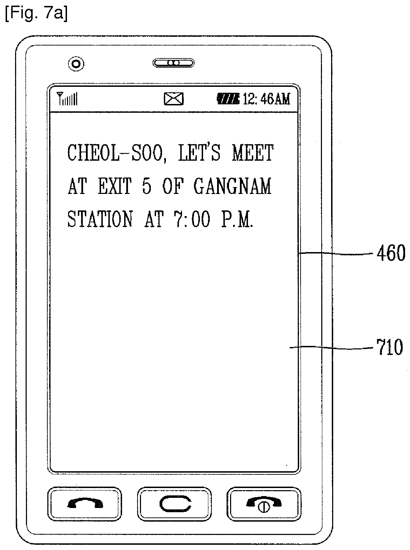

For example, as shown in FIG. 7A, the input unit 410 receives a message 710 "Cheol-soo, Let's meet at Exit 5 of Gangnam station at 7 p.m." corresponding to a user's touch input.

In addition, when an event occurs, namely, when there is no additional input for a period of time (e.g., 3 seconds) previously set by the user, when a pre-set particular button (not shown) (e.g., a message input end button, a send button, or an OK button) provided in the mobile terminal 400, or when a pre-set particular button (not shown) (e.g., a message input end button, a send button, or an OK button) displayed on the display unit 460 is selected, the controller 450 may determine that the input of the message according to the user's touch input has been terminated (step S110).

Thereafter, the controller 450 extracts pre-set particular information included in the received message. Namely, the controller 450 performs a natural language processing procedure such as analyzing a morpheme, analyzing a part of speech, analyzing a passage unit, analyzing a syntax, and the like, on the received message to extract particular information included in the message. The particular information may include a person's name, the name of a place, time information, and the like.

For example, the controller 450 may analyze a person's name included in the received message by performing the natural language processing procedure on the received message. Namely, the controller 450 may classify (or extract) a word that includes a component which can be a subject or a word that may designate a person's name by using vocative postpositional particles such as "a/ya/(yi)yeo/(yi)siyeo" or the like or a subjective postpositional particles such as "eun/neun/yi/ga" and the like. For example, the controller 450 classifies a word "Cheol-soo" including a vocative postpositional particle with respect to the received message.

In another example, the controller 450 analyzes the name of a place included in the received message by performing the natural language processing procedure on the received message. Namely, the controller 450 classifies a word that may have a component designating the name of a place or a location by using postpositional particles (including an adverbial particle indicating a place such as "ei/eso/euro". For example, the controller 450 classifies a word "Gangnam station" and "Exit 5, Gangnam station" including a postpositional particle representing a location with respect to the received message.

In another example, the controller 450 analyzes a time included in the received message by performing the natural language processing procedure on the received message. Namely, the controller 450 classifies a word having a component which may designate a time by using a particle (included in the adverbial particle) representing a time such as 'at', a dependent noun used in expressing a time such as "hour/minute", a noun used in expressing a time such as "antemeridiem/morning/dawn/post meridiem/ evening/night" and the like, or a symbol as colon (:) (e.g., ":" in "07:00") used in expressing a time. For example, the controller 450 classifies a word "7" including a dependent noun representing a time and a word "7 p.m." including a noun and a dependent noun representing a time (step S120).

Thereafter, the controller 450 searches for a phone number corresponding to a name included in the extracted particular information among the names corresponding to the plurality of phone numbers stored in the storage unit 420 based on the extracted particular information.

For example, the controller 450 searches a phone number corresponding to the name "Cheol-soo" among the plurality of phone numbers stored in the storage unit 420 by using the word "Cheol-soo" included in the name analysis results (or name extraction results) according to the natural language processing (step S130).

Thereafter, the controller 450 displays the phone number search results on the display unit 460. In this case, when a plurality of phone numbers correspond to the names according to the phone number search results, the controller 450 displays some or all of the plurality of phone numbers on the display unit 460.

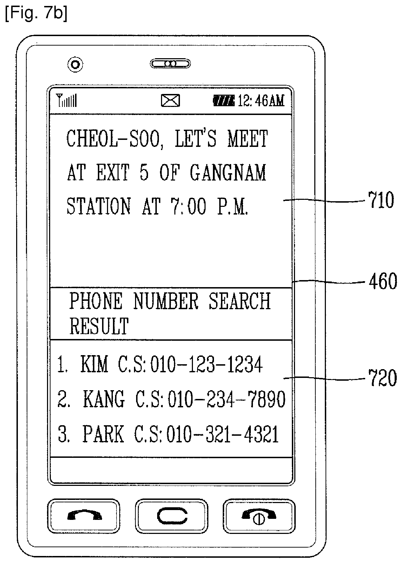

For example, as shown in FIG. 7B, the controller 450 displays phone number search results 720 corresponding to the names included in the extracted particular information among the names corresponding to the plurality of phone numbers stored in the storage unit 420 on the display unit 460 (step S140).

Thereafter, when one of the phone numbers displayed on the display unit 460 is selected according to a user selection, the controller 450 transmits the received message to the second mobile terminal 500 corresponding to the selected phone number.

In addition, when the phone numbers displayed on the display unit 460 are not selected according to a user selection, the controller 450 may receive a phone number according to a user input and transmit the received message to the second mobile terminal 500 corresponding to the received phone number.

In addition, when a phone number corresponding to a name included in the extracted particular information is not searched according to the phone number search result, the controller 450 may receive a phone number according to a user input and transmit the received message to the second mobile terminal 500 corresponding to the received phone number (step S150).

Thereafter, the controller 450 generates road guide information by using the name of a place included in the particular information based on the extracted particular information. In this case, when a plurality of names of places are included in the extracted particular information, the controller 450 may generate road guide information regarding each of the plurality of the names of places, or may select the name of a place having a combination of continued words according to a syntax analysis, or the like, from among the plurality of the names of places (e.g., "Exit 5, Gangnam station" from among "Gangnam station" and "Exit 5, Gangnam station") and generate road guide information regarding the selected name of the place (e.g., "Exit 5, Gangnam station").

For example, the controller 450 generates road guide information including information such as information regarding the surroundings of Gangnam station (or Exit 5, Gangnam station), location information, and the like, by using the word "Gangnam station" or "Exit 5, Gangnam station" included in the place name analysis results (or place name extraction results) according to the natural language processing, and the map data stored in the storage unit 420.

In addition, the controller 450 checks location information of the mobile terminal 400 via the GPS receiver 430, and performs route searching based on the checked current location (e.g., a start point) of the mobile terminal 400 and the name of the place (e.g., a destination) included in the extracted particular information.

For example, the controller 450 checks the location information of the mobile terminal 400 via the GPS receiver 430 and searches a route between the checked current location (e.g., the start point) of the mobile terminal 400 and "Gangnam station" or "Exit 5, Gangnam station" (e.g., a destination) included in the place name analysis results according to the natural language processing (step S160).

Thereafter, the controller 450 displays the generated road guide information or the route search results according to the route searching on the display unit 460.

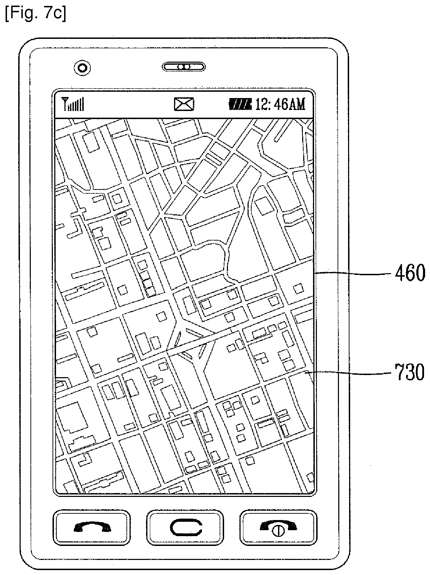

For example, as shown in FIG. 7C, the controller 450 displays road guide information 730 including the information regarding the surroundings of "Gangnam station", the location information, and the like, on the display unit 460 (step S170).

Thereafter, the controller 450 sets an alarm function by using the time information (or time analysis results) included in the particular information based on the extracted particular information.

For example, by using "7" or "7 p.m." included in the time analysis results (or the time extraction results) according to the natural language processing, the controller 450 may set an alarm based on the "7" (or "7 p.m.") or set an alarm function based on the 6:30 (or 6:30 p.m.) earlier by a certain time (e.g., 30 minutes) than "7" (or "7 p.m.").

In this case, when the time analysis results according to the natural language processing includes the word "7" (or "7:00"), the controller 450 may set an alarm at a time closer to a current time based on the current time. Namely, when the time analysis results according to the natural language process include "7:00" and a current time is 3:00 a.m., the controller 450 may set an alarm "7:00 a.m." close to the current time. Also, when the time analysis results according to the natural language process include "7:00" and a current time is 2:00 p.m., the controller 450 may set an alarm "7:00 p.m." close to the current time.

Thereafter, the controller 450 checks the set alarm time, and when the alarm time arrives, the controller 450 performs the alarm function of the mobile terminal 400 (step S180).

In the present exemplary embodiment, the description has been made based on the Korean language (Hangul), but the mobile terminal 400 may be configured to perform the foregoing functions also with various other languages such as English, Japanese, Chinese languages, and the like, besides Korean language. For example, in case of English language, the mobile terminal 400 may be configured to classify (or extract) a person's name, the name of a place, time, and the like included in a received message according to the natural language processing procedure using a sentence structure of English language and perform a phone book search function, a road guide information generation function, a route search function, an alarm setting function, and the like, by using the person's name, the name of a place, time, and the like, as classified.

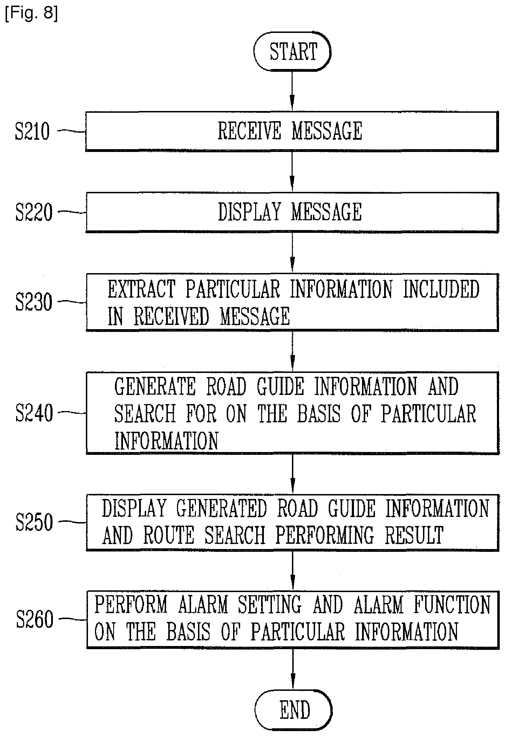

FIG. 8 is a flow chart showing the process of a control method of a mobile terminal according to a second exemplary embodiment.

First, the second communication unit 580 included in the second mobile terminal 500 receives a message according to a message service transmitted from the mobile terminal 400 connected for communication. In this case, the second communication unit 580 may be connected with the second mobile terminal 500 via (or by way of) one or more servers 610, one or more base stations 620, or the like, positioned between the second mobile terminal 500 and the mobile terminal 400 (step S210).

Thereafter, the second controller 550 signal-processes the received message and displays content included in the signal-processed message on the second display unit 560 (step S220).

Thereafter, the second controller 550 extracts pre-set particular information included in the signal-processed message. Namely, the second controller 550 performs a natural language processing procedure such as analyzing a morpheme, analyzing a part of speech, analyzing a passage unit, analyzing a syntax, and the like, on the message to extract particular information included in the message. The particular information may include a person's name, the name of a place, time information, and the like.

For example, the second controller 550 analyzes the name of a place included in the received message (e.g., "Cheol-soo, Let's meet at Exit 5 of Gangnam station at 7 p.m.") by performing the natural language processing procedure on the received message. Namely, the second controller 550 classifies (or extracts) a word that may have a component designating the name of a place or a location by using postpositional particles (including an adverbial particle indicating a place such as "ei/eso/euro". For example, the second controller 550 classifies a word "Gangnam station" and "Exit 5, Gangnam station" including a postpositional particle representing a location with respect to the received message.

In another example, the second controller 550 analyzes a time included in the received message by performing the natural language processing procedure on the received message. Namely, the second controller 550 classifies a word having a component which may designate a time by using a particle (included in the adverbial particle) representing a time such as 'at', a dependent noun used in expressing a time such as "hour/minute", a noun used in expressing a time such as "meridiem/ evening/ night" and the like, or a symbol as colon (:) (e.g., ":" in "07:00") used in expressing a time. For example, the second controller 550 classifies a word "7:00" including a dependent noun representing a time and a word "7:00 p.m." including a noun and a dependent noun representing a time (step S230).

Thereafter, the second controller 550 generates road guide information by using the name of a place included in the particular information based on the extracted particular information. In this case, when a plurality of names of places are included in the extracted particular information, the second controller 550 may generate road guide information regarding each of the plurality of the names of places, or may select the name of a place having a combination of continued words according to a syntax analysis, or the like, from among the plurality of the names of places (e.g., "Exit 5, Gangnam station" from among "Gangnam station" and "Exit 5, Gangnam station") and generate road guide information regarding the selected name of the place (e.g., "Exit 5, Gangnam station").

For example, the second controller 550 generates road guide information including information such as information regarding the surroundings of Gangnam station (or Exit 5, Gangnam station), location information, and the like, by using the word "Gangnam station" or "Exit 5, Gangnam station" included in the place name analysis results (or place name extraction results) according to the natural language processing, and the map data stored in the second storage unit 520.

In addition, the second controller 550 checks location information of the second mobile terminal 500 via the second GPS receiver 530, and performs route searching based on the checked current location (e.g., a start point) of the second mobile terminal 500 and the name of the place (e.g., a destination) included in the extracted particular information.

For example, the second controller 550 checks the location information of the second mobile terminal 500 via the second GPS receiver 530 and searches a route between the checked current location (e.g., the start point) of the second mobile terminal 500 and "Gangnam station" or "Exit 5, Gangnam station" (e.g., a destination) included in the place name analysis results according to the natural language processing (step S240).

Thereafter, the second controller 550 displays the generated road guide information or the route search results according to the route searching on the display unit 460.

For example, the second controller 550 displays road guide information including the information regarding the surroundings of "Gangnam station", the location information, and the like, on the second display unit 560 (step S250).

Thereafter, the second controller 550 sets an alarm function by using the time information (or time analysis results) included in the particular information based on the extracted particular information.

For example, by using "7:00" or "7:00 p.m." included in the time analysis results (or the time extraction results) according to the natural language processing, the second controller 550 may set an alarm based on the 7:00 (or 7:00 p.m.) or set an alarm function based on the 6:30 (or 6:30 p.m.) earlier by a certain time (e.g., 30 minutes) than 7:00 (or 7:00, p.m.).

In this case, when the time analysis results according to the natural language processing includes the word "7:00", the second controller 550 may set an alarm at a time closer to a current time based on the current time. Namely, when the time analysis results according to the natural language process include "7:00" and a current time is 3:00 a.m., the second controller 550 may set an alarm "7:00 a.m." close to the current time. Also, when the time analysis results according to the natural language process include "7:00" and a current time is 2:00 p.m., the second controller 550 may set an alarm "7:00 p.m." close to the current time.

Thereafter, the second controller 550 checks the set alarm time, and when the alarm time arrives, the second controller 550 performs the alarm function of the second mobile terminal 500 (step S260).

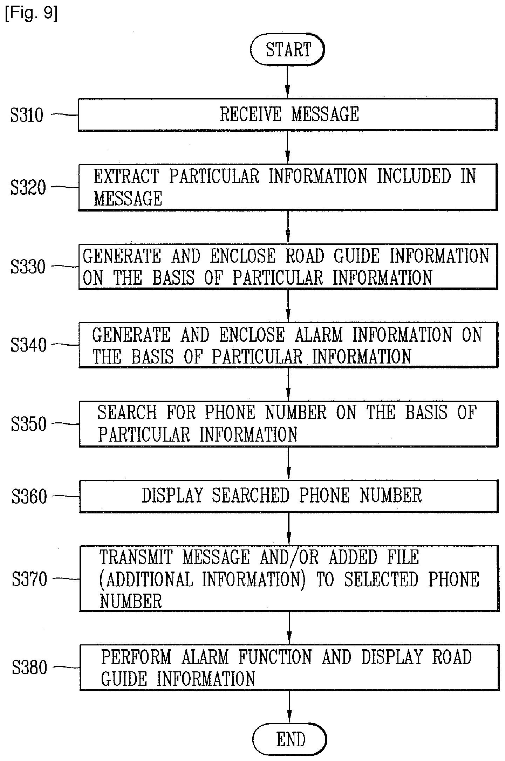

FIG. 9 is a flow chart showing the process of a control method of a mobile terminal according to a third exemplary embodiment.

First, the input unit 410 receives a message according to a user input. In this case, the display unit 460 may perform the function of the input unit 410. Namely, when the display unit 460 includes a touch screen function, it can receive a message corresponding to a user's touch input by using characters/numbers/special characters/ symbols, and the like, displayed on the display unit 460.

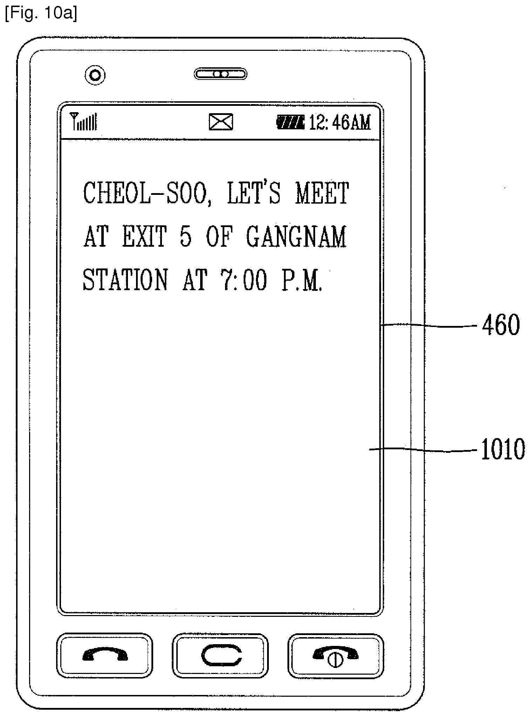

For example, as shown in FIG. 10A, the input unit 410 receives a message 1010 "Cheol-soo, Let's meet at Exit 5 of Gangnam station at 7 p.m.".

In addition, when an event occurs, namely, when there is no additional input for a period of time previously set by the user, when a pre-set particular button (not shown) (e.g., a message input end button, a send button, or an OK button) provided in the mobile terminal 400, or when a pre-set particular button (not shown) (e.g., a message input end button, a send button, or an OK button) displayed on the display unit 460 is selected, the controller 450 may determine that the input of the message according to the user's touch input has been terminated (step S310).

Thereafter, the controller 450 extracts pre-set particular information included in the received message. Namely, the controller 450 performs a natural language processing procedure such as analyzing a morpheme, analyzing a part of speech, analyzing a passage unit, analyzing a syntax, and the like, on the received message to extract particular information included in the message. The particular information may include a person's name, the name of a place, time information, and the like.

For example, the controller 450 may analyze a person's name included in the received message by performing the natural language processing procedure on the received message. Namely, the controller 450 may classify (or extract) a word that includes a component which can be a subject or a word that may designate a person's name by using vocative postpositional particles such as "a/ya/(yi)yeo/(yi)siyeo" or the like or a subjective postpositional particles such as "eun/neun/yi/ga" and the like. For example, the controller 450 classifies a word "Cheol-soo" including a vocative postpositional particle with respect to the received message.

In another example, the controller 450 analyzes the name of a place included in the received message by performing the natural language processing procedure on the received message. Namely, the controller 450 classifies a word that may have a component designating the name of a place or a location by using postpositional particles (including an adverbial particle indicating a place such as "ei/eso/euro". For example, the controller 450 classifies a word "Gangnam station" and "Exit 5, Gangnam station" including a postpositional particle representing a location with respect to the received message.

In another example, the controller 450 analyzes a time included in the received message by performing the natural language processing procedure on the received message. Namely, the controller 450 classifies a word having a component which may designate a time by using a particle (included in the adverbial particle) representing a time such as 'at', a dependent noun used in expressing a time such as "hour/minute", a noun used in expressing a time such as "antemeridiem/morning/dawn/post meridiem/ evening/night" and the like, or a symbol as colon (:) (e.g., ":" in "07:00") used in expressing a time. For example, the controller 450 classifies a word "7:00" including a dependent noun representing a time and a word "7:00 p.m." including a noun and a dependent noun representing a time (step S320).

Thereafter, the controller 450 generates road guide information by using the name of a place included in the particular information based on the extracted particular information, and stores the generated road guide information in the storage unit 420. In this case, the generated road guide information may be generated in the form of a single image file including map data, and the like. Also, when a plurality of names of places are included in the extracted particular information, the controller 450 may generate road guide information regarding each of the plurality of the names of places, or may select the name of a place having a combination of continued words according to a syntax analysis, or the like, from among the plurality of the names of places (e.g., "Exit 5, Gangnam station" from among "Gangnam station" and "Exit 5, Gangnam station") and generate road guide information regarding the selected name of the place (e.g., "Exit 5, Gangnam station").

For example, the controller 450 generates road guide information in the form of an image file (e.g., "Gangnam station.gif") including information such as information regarding the surroundings of Gangnam station (or Exit 5, Gangnam station), location information, and the like, by using the word "Gangnam station" or "Exit 5, Gangnam station" included in the place name analysis results (or place name extraction results) according to the natural language processing, and the map data stored in the storage unit 420.

In addition, the controller 450 attaches the generated road guide information as an enclosure file of the received message.

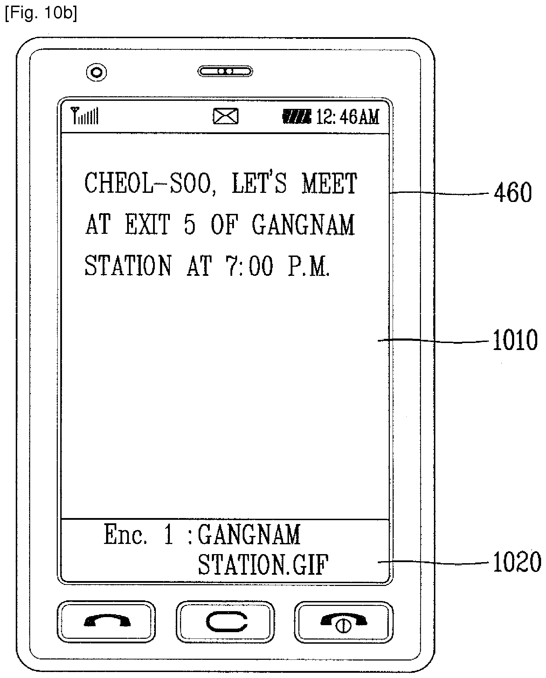

For example, as shown in FIG. 10B, the controller 450 attach (1020) the generated road guide information as an enclosure file of the received message (step S330).

Thereafter, the controller 450 generates alarm information by using the information regarding time included in the particular information based on the extracted particular information, and stores the generated alarm information in the storage unit 420. In this case, the generated alarm information may be generated in the form of a single file (e.g., "alarm information.dat") including time information.

For example, by using "7:00" or "7:00 p.m." included in the time analysis results (or the time extraction results) according to the natural language processing, the controller 450 may set an alarm based on the 7:00 (or 7:00 p.m.) or generate alarm information based on the 6:30 (or 6:30 p.m.) earlier by a certain time (e.g., 30 minutes) than 7:00 (or 7:00, p.m.).

In this case, when the time analysis results according to the natural language processing includes the word "7:00", the controller 450 may generate alarm information regarding a time closer to a current time based on the current time. Namely, when the time analysis results according to the natural language process include "7:00" and a current time is 3:00 a.m., the controller 450 may generate (or set) alarm information as "7:00 a.m." close to the current time. Also, when the time analysis results according to the natural language process include "7:00" and a current time is 2:00 p.m., the controller 450 may generate alarm information as "7:00 p.m." close to the current time.

In addition, the controller 450 attaches the generated alarm information as an enclosure file of the received message.

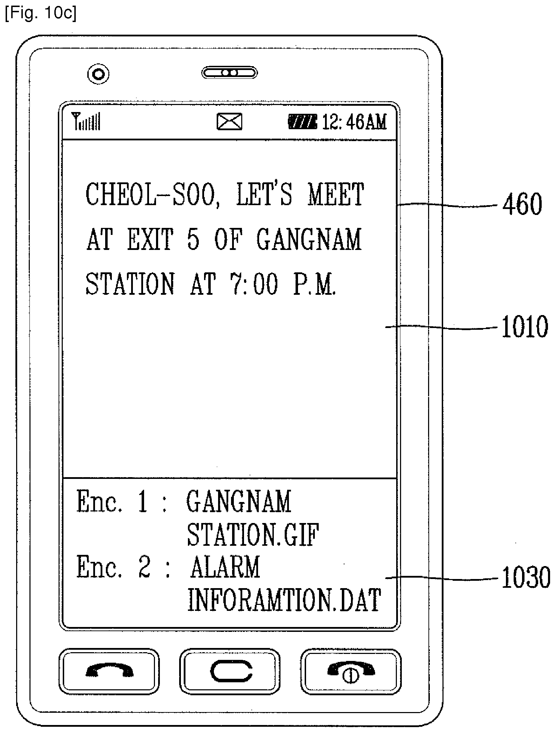

For example, as shown in FIG. 10C, the controller 450 may attach (1030) the generated alarm information as an enclosure file of the received message (step S340).

Thereafter, the controller 450 searches for a phone number corresponding to a name included in the extracted particular information among the names corresponding to the plurality of phone numbers stored in the storage unit 420 based on the extracted particular information.

For example, the controller searches a phone number corresponding to the name "Cheol-soo" among the plurality of phone numbers stored in the storage unit 420 by using the word "Cheol-soo" included in the name analysis results according to the natural language processing (step S350).

Thereafter, the controller 450 displays the phone number search results on the display unit 460. In this case, when a plurality of phone numbers correspond to the names according to the phone number search results, the controller 450 displays some or all of the plurality of phone numbers on the display unit 460.

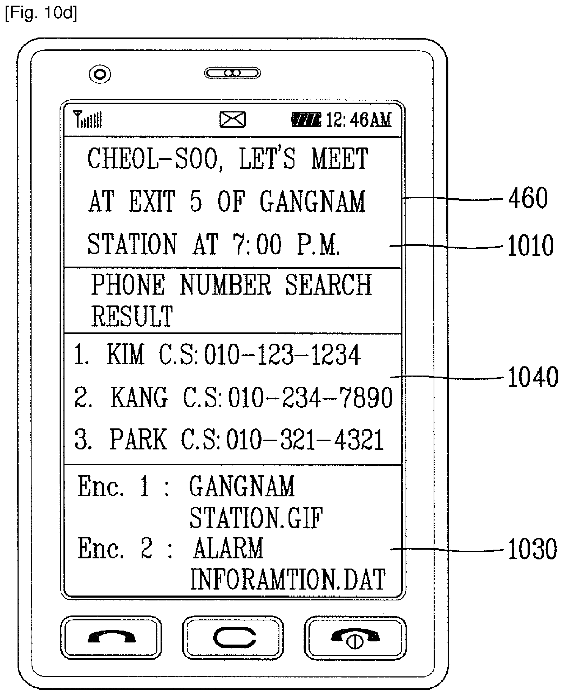

For example, as shown in FIG. 10D, the controller 450 displays phone number search results 1040 corresponding to the names, the results obtained by performing the natural language processing, among the names corresponding to the plurality of phone numbers stored in the storage unit 420, on the display unit 460 (step S360).

Thereafter, when one of the phone numbers displayed on the display unit 460 is selected according to a user touch, the controller 450 transmits the received message and/or one or more enclosure files to the second mobile terminal 500 corresponding to the selected phone number. Here, the one or more enclosure files may be additional information corresponding to the particular information. Namely, the additional information corresponding to the particular information may include at least one of the generated road guide information and the generated alarm information.

In addition, when the phone numbers displayed on the display unit 460 are not selected according to a user touch, the controller 450 may receive a message corresponding to the phone number according to an additional user's touch input and transmit the received message and/or one or more enclosure files to the second mobile terminal 500 corresponding to the phone number.

In addition, when a phone number displayed on the display unit 460 is not selected according to a user touch input, the controller 450 may receive a message corresponding to a phone number according to an additional user's touch input, and transmit the received message and/or one or more enclosure files to the second mobile terminal 500 corresponding to the phone number.

In addition, when a phone number corresponding to the name included in the extracted particular information is not searched according to the phone number search results, the controller 450 may receive a message corresponding to a phone number according to a user's touch input, and transmit the received message and/or one or more enclosure files (e.g., including the road guide information and/or the alarm information) to the second mobile terminal 500 corresponding to the phone number (step S370).

Thereafter, the controller 450 checks the alarm time stored in the storage unit 420, and when the alarm time arrives, the controller 450 performs the alarm function of the mobile terminal 400.

In addition, the controller 450 may display the road guide information stored in the storage unit 420 on the display unit 460.

In addition, the controller 450 checks location information of the mobile terminal 400 via the GPS receiver 430, performs route searching based on the checked current location (e.g., a start point) of the mobile terminal 400 and the name of the place (e.g., a destination) included in the extracted particular information, and display route search results according to the route searching on the display unit 460.

In addition, when the alarm function is performed, the controller 450 may display the road guide information stored in the storage unit 420 on the display unit 460.

In addition, when the alarm function is performed, the controller 450 checks location information of the mobile terminal 400 via the GPS receiver 430, and performs route searching based on the checked current location (e.g., a start point) of the mobile terminal 400 and the name of the place (e.g., a destination) included in the extracted particular information.

For example, the controller 450 checks the location information of the mobile terminal 400 via the GPS receiver 430 and searches a route between the checked current location (e.g., the start point) of the mobile terminal 400 and "Gangnam station" or "Exit 5, Gangnam station" (e.g., a destination) included in the place name analysis results according to the natural language processing.

Thereafter, the controller 450 displays the route search results according to the route searching on the display unit 460 (step S380).

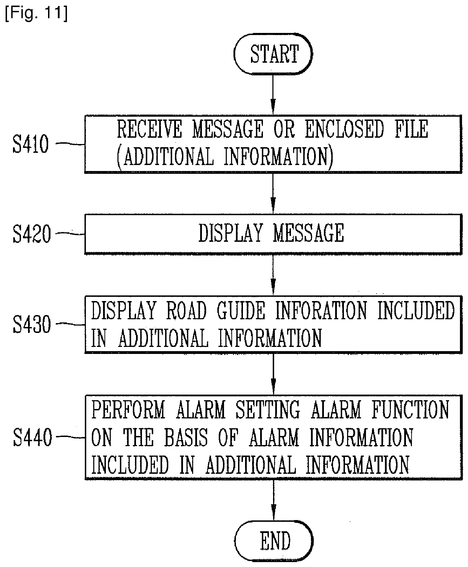

FIG. 11 is a flow chart showing the process of a control method of a mobile terminal according to a fourth exemplary embodiment.

First, the second communication unit 580 included in the second mobile terminal 500 receives a message according to a message service transmitted from the mobile terminal 400 connected for communication. In this case, the second communication unit 580 may be connected with the second mobile terminal 500 via (or by way of) one or more servers 610, one or more base stations 620, or the like, positioned between the second mobile terminal 500 and the mobile terminal 400. In addition, when the message is received, the second mobile terminal 500 may receive additional information delivered along with the message. Here, the additional information may include at least one of road guide information and alarm information (step S410).

Thereafter, the second controller 550 signal-processes the received message and displays the signal-processed message on the second display unit 560.

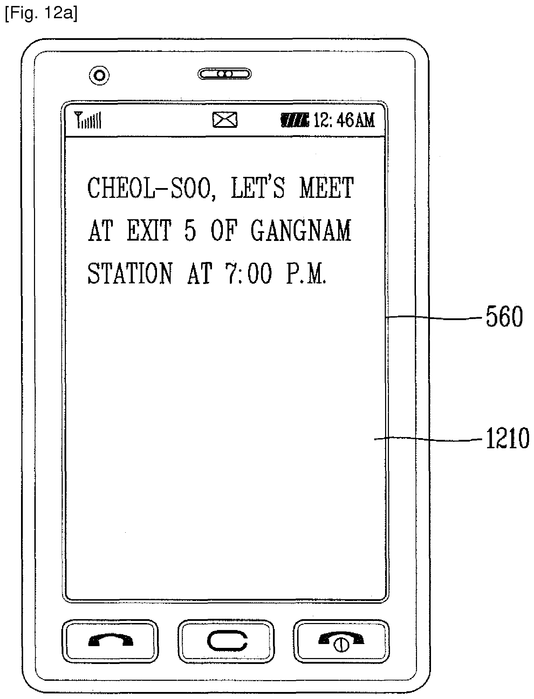

For example, as shown in FIG. 12A, the second controller 550 signal-processes the received message (e.g., "Cheol-soo, Let's meet at Exit 5 of Gangnam station at 7 p.m."), and displays the signal-processed message 1210 on the second display unit 560 (step S420).

Thereafter, the second controller 550 signal-processes the road guide information included in the received additional information and displays the signal-processed road guide information on the second display unit 560. In this case, when a pre-set button (not shown) is selected by the user in a state in which the received message is displayed on the second display unit 560, or the state in which the received message is displayed on the second display unit 560 is maintained for a pre-set time, the second controller 550 may display the road guide information related to the received message on the second display unit 560. Also, in the state in which the received message is displayed on the second display unit 560, the second controller 550 may divide the display area of the second display unit 560, display the received message on a first area among the divided areas, and display the received road guide information on a second area among the divided areas.

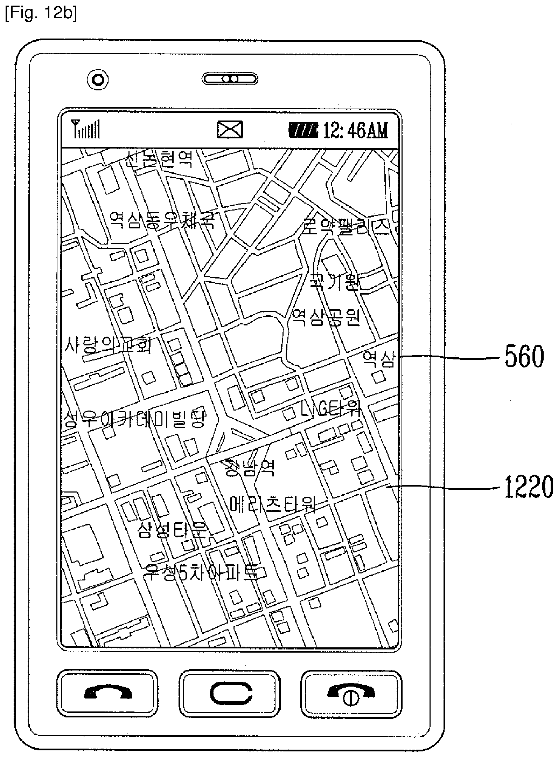

For example, as shown in FIG. 12B, when a pre-set button is selected by the user in a state in which the received message is displayed on the second display unit 560, or when a display time of the received message exceeds a pre-set time (e.g., ten seconds), the second controller 550 displays the received road guide information 1220 related to the received message on the second display unit 560.

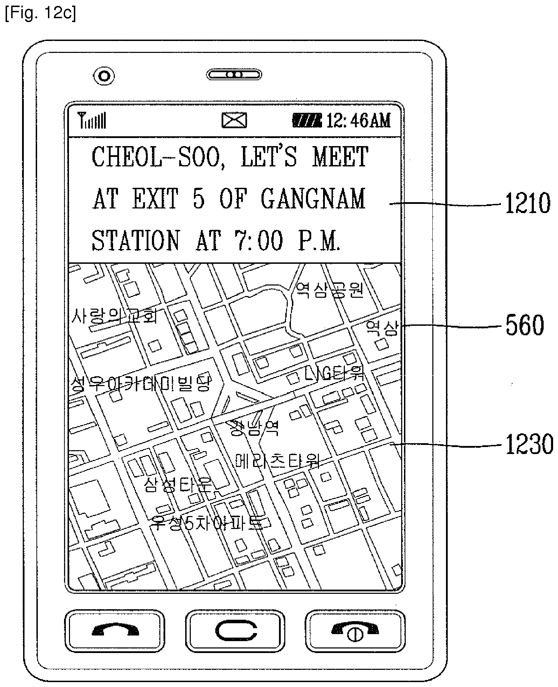

In another example, as shown in FIG. 12C, when a pre-set button is selected by the user in a state in which the received message is displayed on the second display unit 560, or when a display time of the received message exceeds a pre-set time (e.g., ten seconds), the second controller 550 displays the received message on the first area 1210 of the second display unit 560 and the received road guide message on the second area 1230 of the second display unit 560 (step S430).

Thereafter, the second controller 550 signal-processes alarm information included in the received additional information and sets an alarm function of the second mobile terminal 500 based on the signal-processed alarm information.

Thereafter, the second controller 550 checks the set alarm time, and when the alarm time arrives, the second controller 550 performs the alarm function of the second mobile terminal 500 (step S440).

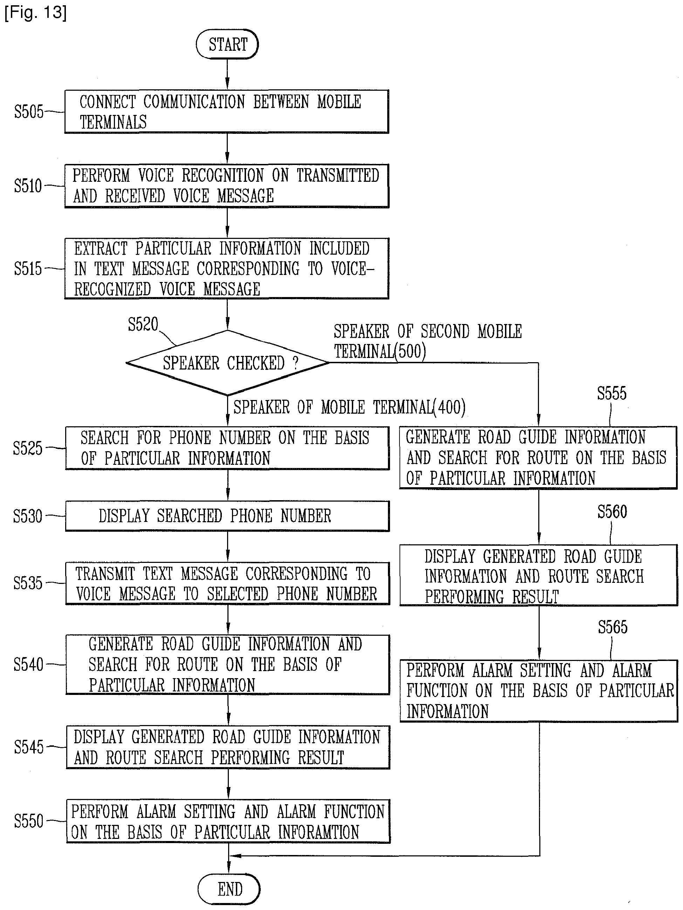

FIG. 13 is a flow chart showing the process of a control method of a mobile terminal according to a fifth exemplary embodiment.

First, the controller 450 performs a communication connection with the second mobile terminal 500 via the communication unit 480. In this case, the communication unit 480 may be connected with the mobile terminal 400 via (or by way of) one or more servers 610, one or more base stations 620, or the like, positioned between the mobile terminal 400 and the second mobile terminal 500.

In addition, after communication with the second mobile terminal 500 is normally made at an initial stage, the controller 450 performs a function of normally performing a communication process between the terminals (step S505).

Thereafter, the controller 450 performs a speech recognition or a voice recognition process on voice data (or a voice message) transmitted and received between the terminals.

Namely, the controller 450 performs a voice recognition according to each speaker on the voice data transmitted and received between the terminals.

In addition, after performing the voice recognition process, the controller 450 generates a text message corresponding to the voice-recognized voice data.

In this case, when the communication process is being performed between the terminals, the controller 450 may store the voice data transmitted and received between the terminals in the storage unit 420, and after the communication process performed between the terminals is terminated, the controller 450 may perform the voice recognition process on the voice data transmitted and received between the terminals stored in the storage unit 420.

In addition, when the communication process is being performed between the terminals, the controller 450 may store the voice data transmitted and received between the terminals in the storage unit 420 at a pre-set time interval, and perform the voice recognition process on the voice data stored in the storage unit 420.

For example, the controller 450 performs a voice recognition process on voice data (e.g., "Tom, Let's meet at Gangnam station at 8 p.m.") transferred from the mobile terminal 400 to the second mobile terminal 500.

In addition, in the exemplary embodiment, the controller 450 performs the voice recognition process on the voice data transmitted and received between the terminals stored in the storage unit 420 after the communication process between the terminals is terminated, but the controller 450 may perform the voice recognition process even while the communication process is being performed between the terminals (step S510).

Thereafter, the controller 450 extracts pre-set particular information included in the voice message whose voice has been recognized according to each speaker based on the voice recognition results. Namely, the controller 450 performs a natural language processing procedure such as analyzing a morpheme, analyzing a part of speech, analyzing a passage unit, analyzing a syntax, and the like, on the voice message whose voice has been recognized according to each speaker to extract particular information included in the voice message whose voice has been recognized according to each speaker. The particular information may include a person's name, the name of a place, time information, and the like. In this case, the controller 450 may extract the particular information included in the voice message based on the voice recognition results.

For example, the controller 450 may analyze (or extract) a person's name included in the text message by performing the natural language processing procedure on the text message corresponding to the voice message. Namely, the controller 450 may classify (or extract) a word that may designate a person's name based on the sentence structure of English. For example, the controller 450 classifies a word "Tom" with respect to the text message.

In another example, the controller 450 analyzes the name of a place included in the text message by performing the natural language processing procedure on the text message corresponding to the voice message. Namely, the controller 450 classifies a word that may have a component designating the name of a place or a location based on prepositions (e.g., at/on/in/to/in front of, etc.) used for a sentence structure of English or the name of a place. For example, the controller 450 classifies a word "Gangnam" and "Gangnam station" including a preposition representing a location with respect to the text message.

In another example, the controller 450 analyzes a time included in the text message by performing the natural language processing procedure on the text message corresponding to the voice message. Namely, the controller 450 classifies a word having a component which may designate a time by using a preposition (e.g., at/on/in, etc.) used for a time, a noun used to express a time such as "o'clock/a.m./p.m/", etc., or a symbol as colon (:) (e.g., ":" in "08:00" used in expressing a time. For example, the controller 450 classifies words "8" and "8 p.m." including a preposition representing a time with respect to the text message (step S515).

Thereafter, the controller 450 checks a speaker of the voice message.

Namely, the controller 450 checks a speaker who has made a voice of the voice message (e.g., "Tom, Let's meet at Gangnam station at 8 p.m.") is a speaker of the mobile terminal 400 or a speaker of the second mobile terminal 500. In this case, the controller 450 stores the speaker model with respect to the speaker of the mobile terminal 400 (or respective speaker models corresponding to a plurality of mobile terminals) in the storage unit 420 and check (or discriminate) the speaker of each of the voice messages stored in the storage unit 420 by using the speaker models stored in the storage unit 420.

In addition, the controller 450 may generate a speaker model of each speaker by using the plurality of voice messages and check (or discriminate) the speaker of each of the voice messages stored in the storage unit 420 by using the generated speaker models (step S520).

When the speaker who has made a voice of the voice message is the speaker of the mobile terminal 400 according to the check results, the controller 450 searches for a phone number corresponding to the name included in the particular information among the names corresponding to the plurality of phone numbers stored in the storage unit 420 based on the extracted particular information.

For example, the controller 450 may search a phone number corresponding to the name "Tom" among a plurality of phone numbers stored in the storage unit 420 by using the word "Tom" included in the name analysis results according to the natural language processing.

In addition, when the terminals are connected for communication, the controller 450 may search for (or check) a phone number of the second mobile terminal 500 to or from which the voice message has been transmitted or received (step S525).

Thereafter, the controller 450 displays the phone number search results on the display unit 460. In this case, when a plurality of phone numbers correspond to the names according to the phone number search results, the controller 450 displays some or all of the plurality of phone numbers on the display unit 460. In addition, the phone number search results may include the phone number of the second mobile terminal 500 to and from which the voice message has been transmitted or received.

In addition, the controller 450 may display the text message corresponding to the voice-recognized voice message on the display unit 460 together.

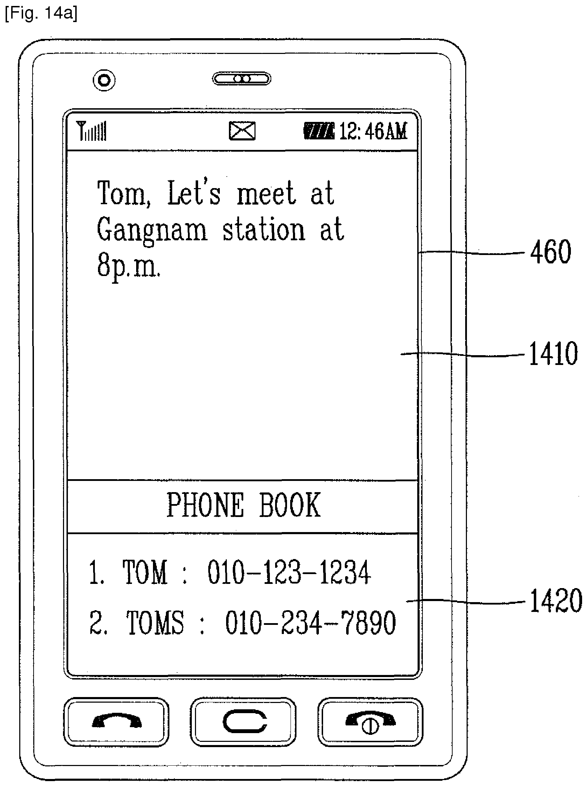

For example, as shown in FIG. 14A, the controller 450 displays phone number search results 1420 corresponding to the names, the results obtained by performing the natural language processing, among the names corresponding to the plurality of phone numbers stored in the storage unit 420, on a portion of the display unit 460 and content 1410 of the text message corresponding to the voice-recognized voice message on another portion of the display unit 460 (step S530).

Thereafter, when one of the phone numbers displayed on the display unit 460 is selected according to a user selection, the controller 450 transmits the text message corresponding to the voice message to the second mobile terminal 500 corresponding to the selected phone number. In this case, the controller 450 may transmit only the corresponding content of the voice message stored in the storage unit 420 to the second mobile terminal 500 corresponding to the selected phone number. For example, the controller 450 may transmit the content (e.g., "Tom, Let's meet at Gangnam station at 8 p.m.") of the voice message corresponding to the sentence including a name, the name of a place, time, and the like (e.g., Tom, Gangnam station, 8 p.m., etc.) included in the results obtained by perform the natural language processing among the voice message stored in the storage unit 420, to the second mobile terminal 500 corresponding to the selected phone number.

In addition, when the phone numbers displayed on the display unit 460 are not selected according to a user selection, the controller 450 may receive an additional phone number according to a user input and transmit the text message corresponding to the voice message to the second mobile terminal 500 corresponding to the received phone number.

In addition, when a phone number corresponding to a name included in the extracted particular information is not searched according to the phone number search result, the controller 450 may receive an additional phone number according to a user input and transmit the text message corresponding to the voice message to the second mobile terminal 500 corresponding to the received phone number (step S535).

Thereafter, the controller 450 generates road guide information by using the name of a place included in the particular information based on the extracted particular information. In this case, when a plurality of names of places are included in the extracted particular information, the controller 450 may generate road guide information regarding each of the plurality of the names of places, or may select the name of a place having a combination of continued words according to a syntax analysis, or the like, from among the plurality of the names of places (e.g., "Gangnam station" from among "Gangnam" and "Gangnam station") and generate road guide information regarding the selected name of the place (e.g., "Gangnam station").

For example, the controller 450 generates road guide information including information such as information regarding the surroundings of Gangnam station, location information, and the like, by using the word "Gangnam station" included in the place name analysis results according to the natural language processing, and the map data stored in the storage unit 420.

In addition, the controller 450 checks location information of the mobile terminal 400 via the GPS receiver 430, and performs route searching based on the checked current location (e.g., a start point) of the mobile terminal 400 and the name of the place (e.g., a destination) included in the extracted particular information.

For example, the controller 450 checks the location information of the mobile terminal 400 via the GPS receiver 430 and searches a route between the checked current location (e.g., the start point) of the mobile terminal 400 and "Gangnam station" (e.g., a destination) included in the place name analysis results according to the natural language processing (step S540).

Thereafter, the controller 450 displays the generated road guide information or the route search results according to the route searching on the display unit 460.

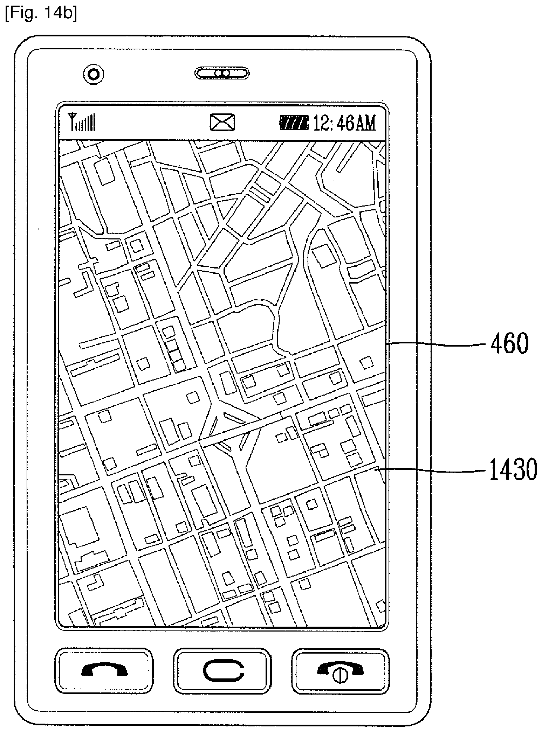

For example, as shown in FIG. 14B, the controller 450 displays road guide information 1430 including the information regarding the surroundings of "Gangnam station", the location information, and the like, on the display unit 460 (step S545).

Thereafter, the controller 450 sets an alarm function by using the time information included in the particular information based on the extracted particular information.

For example, by using "8" or "8 p.m." included in the time analysis results according to the natural language processing, the controller 450 may set an alarm based on "8" (or "8 p.m.") or set an alarm function based on the 7:40 (or 7:40 p.m.) earlier by a certain time (e.g., 20 minutes) than"8" (or "8 p.m.").

In this case, when the time analysis results according to the natural language processing includes the word "8", the controller 450 may set an alarm at a time closer to a current time based on the current time. Namely, when the time analysis results according to the natural language process include "8" and a current time is 3:00 a.m., the controller 450 may set an alarm "8:00 a.m." close to the current time. Also, when the time analysis results according to the natural language process include "8" and a current time is 2:00 p.m., the controller 450 may set an alarm "8:00 p.m." close to the current time.

Thereafter, the controller 450 checks the set alarm time, and when the alarm time arrives, the controller 450 performs the alarm function of the mobile terminal 400 (step S550).

Also, when the speaker who has made a voice of the voice message is the speaker of the second mobile terminal 500 according to the check results in step S520, the controller 450 generates road guide information by using the name of a place included in the particular information based on the extracted particular information. In this case, when a plurality of names of places are included in the extracted particular information, the controller 450 may generate road guide information regarding each of the plurality of the names of places, or may select the name of a place having a combination of continued words according to a syntax analysis, or the like, from among the plurality of the names of places (e.g., "Gangnam station" from among "Gangnam" and "Gangnam station") and generate road guide information regarding the selected name of the place (e.g., "Gangnam station").

In addition, the controller 450 checks location information of the mobile terminal 400 via the GPS receiver 430, and performs route searching based on the checked current location (e.g., a start point) of the mobile terminal 400 and the name of the place (e.g., a destination) included in the extracted particular information (step S555).

Thereafter, the controller 450 displays the generated road guide information or the route search results according to the route searching on the display unit 460.

For example, as shown in FIG. 14B, the controller 450 displays road guide information 1430 including the information regarding the surroundings of "Gangnam station", the location information, and the like, on the display unit 460 (step S560).

Thereafter, the controller 450 sets an alarm function by using the time information included in the particular information based on the extracted particular information.

Thereafter, the controller 450 checks the set alarm time, and when the alarm time arrives, the controller 450 performs the alarm function of the mobile terminal 400 (step S565).

In the exemplary embodiment, the description has been made based on the English language, but the mobile terminal 400 may be configured to perform the foregoing functions also with various other languages such as Korean, Japanese, Chinese languages, and the like, besides English language. For example, in case of Korean language, the mobile terminal 400 may be configured to classify a person's name, the name of a place, time, and the like included in a received message according to the natural language processing procedure using a sentence structure of Korean language and perform a phone book search function, a road guide information generation function, a route search function, an alarm setting function, and the like, by using the person's name, the name of a place, time, and the like, as classified.

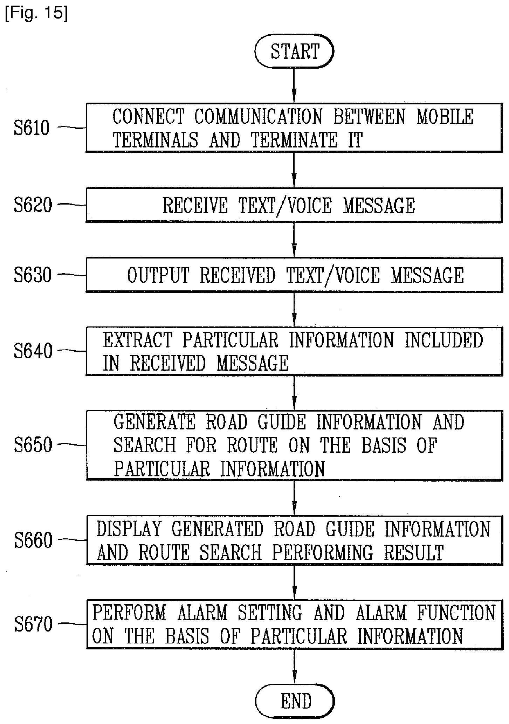

FIG. 15 is a flow chart showing a control method of a mobile terminal according to a sixth exemplary embodiment.

First, the second communication unit 580 included in the second mobile terminal 500 transmits and receives various messages including a voice message, a text message, a control signal, and the like, through the mobile terminal 400 connected for communication. In this case, the second communication unit 580 may be connected with the second mobile terminal 500 via (or by way of) one or more servers 610, one or more base stations 620, or the like, positioned between the second mobile terminal 500 and the mobile terminal 400.

Thereafter, when communication connection with the mobile terminal 400 is terminated, the second mobile terminal 500 maintains a standby state (step S610).

Thereafter, the second communication unit 580 receives a text message or a voice message transmitted from the mobile terminal 400 (step S620).

Thereafter, when the text message is received, the second controller 550 signal-processes the received text message and display content included in the signal-processed text message on the second display unit 560.

In addition, when a voice message is received, the second controller 550 signal-processes the received voice message and outputs content included in the signal-processed voice message to the second voice output unit 570. In addition, when a voice message is received, the second controller 550 converts the voice message into a text message, so that the converted text message can be used (step S630).

Thereafter, the second controller 550 extracts pre-set particular information included in the content included in the signal-processed text message (or the text message corresponding to the voice message). Namely, the second controller 550 performs a natural language processing procedure such as analyzing a morpheme, analyzing a part of speech, analyzing a passage unit, analyzing a syntax, and the like, on the signal-processed text message (or the text message corresponding to the voice message) to extract particular information included in the signal-processed text message (or the text message corresponding to the voice message).

For example, the second controller 550 analyzes (or extracts) the name of a place included in the text message by performing the natural language processing procedure on the text message (e.g., "Tom, Let's meet at Gangnam station at 8 p.m."). Namely, the second controller 550 classifies a word that may have a component designating the name of a place or a location based on prepositions (e.g., at/on/in/to/in front of, etc.) used for a sentence structure of English or the name of a place. For example, the second controller 550 classifies a word "Gangnam" and "Gangnam station" including a preposition representing a location with respect to the text message.

In another example, the second controller 550 analyzes a time included in the text message by performing the natural language processing procedure on the text message. Namely, the second controller 550 classifies a word having a component which may designate a time by using a preposition (e.g., at/on/in, etc.) used for a time, a noun used to express a time such as "o'clock/a.m./p.m/", etc., or a symbol as colon (:) (e.g., ":" in "08:00") used in expressing a time. For example, the second controller 550 classifies words "8" and "8 p.m." including a preposition representing a time with respect to the text message (step S640).

Thereafter, the second controller 550 generates road guide information by using the name of a place included in the particular information based on the extracted particular information. In this case, when a plurality of names of places are included in the extracted particular information, the second controller 550 may generate road guide information regarding each of the plurality of the names of places, or may select the name of a place having a combination of continued words according to a syntax analysis, or the like, from among the plurality of the names of places (e.g., "Gangnam station" from among "Gangnam" and "Gangnam station") and generate road guide information regarding the selected name of the place (e.g., "Gangnam station").

For example, the second controller 550 generates road guide information including information such as information regarding the surroundings of Gangnam station, location information, and the like, by using the word "Gangnam station" included in the place name analysis results according to the natural language processing, and the map data stored in the second storage unit 520.

In addition, the second controller 550 checks location information of the second mobile terminal 500 via the second GPS receiver 530, and performs route searching based on the checked current location (e.g., a start point) of the second mobile terminal 500 and the name of the place (e.g., a destination) included in the extracted particular information.

For example, the second controller 550 checks the location information of the second mobile terminal 500 via the second GPS receiver 530 and searches a route between the checked current location (e.g., the start point) of the second mobile terminal 500 and "Gangnam station" (e.g., a destination) included in the place name analysis results according to the natural language processing (step S650).

Thereafter, the second controller 550 displays the generated road guide information or the route search results according to the route searching on the second display unit 560.

For example, the second controller 550 displays road guide information including the information regarding the surroundings of "Gangnam station", the location information, and the like, on the second display unit 560 (step S660).

Thereafter, the second controller 550 sets an alarm function by using the time information included in the particular information based on the extracted particular information.

For example, by using "8" or "8 p.m." included in the time analysis results according to the natural language processing, the second controller 550 may set an alarm based on "8" (or "8 p.m.") or set an alarm function based on the 7:40 (or 7:40 p.m.) earlier by a certain time (e.g., 20 minutes) than "8" (or "8 p.m.").

In this case, when the time analysis results according to the natural language processing includes the word "8", the second controller 550 may set an alarm at a time closer to a current time based on the current time. Namely, when the time analysis results according to the natural language process include "8" and a current time is 3:00 a.m., the second controller 550 may set an alarm "8:00 a.m." close to the current time. Also, when the time analysis results according to the natural language process include "8" and a current time is 2:00 p.m., the second controller 550 may set an alarm "8:00 p.m." close to the current time.

Thereafter, the second controller 550 checks the set alarm time, and when the alarm time arrives, the second controller 550 performs the alarm function of the second mobile terminal 500 (step S670).

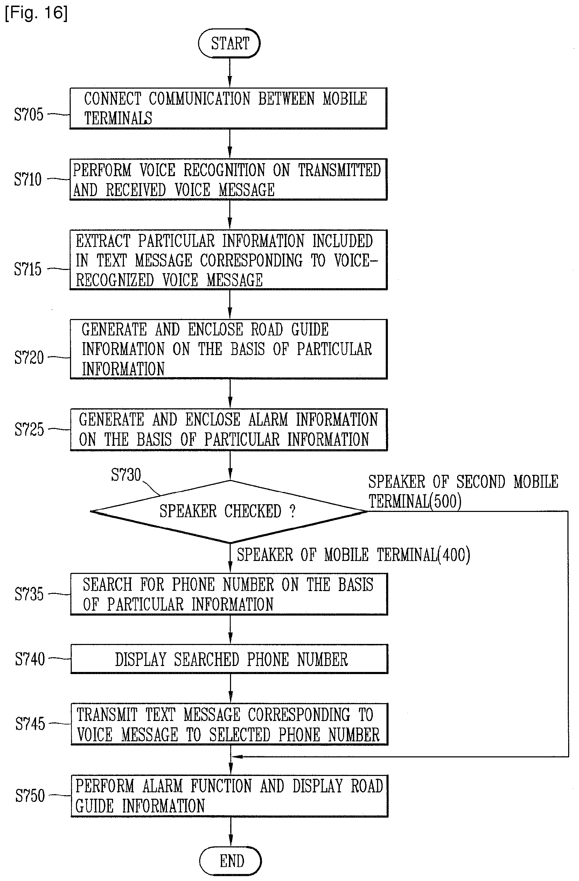

FIG. 16 is a flow chart showing the process of a control method of a mobile terminal according to a seventh exemplary embodiment.

First, the controller 450 performs a communication connection with the second mobile terminal 500 via the communication unit 480. In this case, the communication unit 480 may be connected with the mobile terminal 400 via (or by way of) one or more servers 610, one or more base stations 620, or the like, positioned between the mobile terminal 400 and the second mobile terminal 500.

In addition, after communication with the second mobile terminal 500 is normally made at an initial stage, the controller 450 performs a function of normally performing a communication process between the terminals (S705).

Thereafter, the controller 450 performs a speech recognition or a voice recognition process on voice data (or a voice message) transmitted and received between the terminals.

Namely, the controller 450 performs a voice recognition according to each speaker on the voice data transmitted and received between the terminals.

In addition, after performing the voice recognition process, the controller 450 generates a text message corresponding to the voice-recognized voice data.

In this case, when the communication process is being performed between the terminals, the controller 450 may store the voice data transmitted and received between the terminals in the storage unit 420, and after the communication process performed between the terminals is terminated, the controller 450 may perform the voice recognition process on the voice data transmitted and received between the terminals stored in the storage unit 420.

In addition, when the communication process is being performed between the terminals, the controller 450 may store the voice data transmitted and received between the terminals in the storage unit 420 at a pre-set time interval, and perform the voice recognition process on the voice data stored in the storage unit 420.

For example, the controller 450 performs a voice recognition process on voice data (e.g., "Tom, Let's meet at Gangnam station at 8 p.m.") transferred from the mobile terminal 400 to the second mobile terminal 500.

In addition, in the exemplary embodiment, the controller 450 performs the voice recognition process on the voice data transmitted and received between the terminals stored in the storage unit 420 after the communication process between the terminals is terminated, but the controller 450 may perform the voice recognition process even while the communication process is being performed between the terminals (step S710).

Thereafter, the controller 450 extracts pre-set particular information included in the voice message whose voice has been recognized according to each speaker based on the voice recognition results. Namely, the controller 450 performs a natural language processing procedure such as analyzing a morpheme, analyzing a part of speech, analyzing a passage unit, analyzing a syntax, and the like, on the voice message whose voice has been recognized according to each speaker to extract particular information included in the voice message whose voice has been recognized according to each speaker. In this case, the controller 450 may extract the particular information included in the voice message based on the voice recognition results.

For example, the controller 450 may analyze (or extract) a person's name included in the text message by performing the natural language processing procedure on the text message corresponding to the voice message. Namely, the controller 450 may classify (or extract) a word that may designate a person's name based on a sentence structure of English. For example, the controller 450 classifies a word "Tom" with respect to the text message.

In another example, the controller 450 analyzes the name of a place included in the text message by performing the natural language processing procedure on the text message corresponding to the voice message. Namely, the controller 450 classifies a word that may have a component designating the name of a place or a location based on prepositions (e.g., at/on/in/to/in front of, etc.) used for a sentence structure of English or the name of a place. For example, the controller 450 classifies a word "Gangnam" and "Gangnam station" including a preposition representing a location with respect to the text message.

In another example, the controller 450 analyzes a time included in the text message by performing the natural language processing procedure on the text message corresponding to the voice message. Namely, the controller 450 classifies a word having a component which may designate a time by using a preposition (e.g., at/on/in, etc.) used for a time, a noun used to express a time such as "o'clock/a.m./p.m/", etc., or a symbol as colon (:) (e.g., ":" in "08:00") used in expressing a time. For example, the controller 450 classifies words "8" and "8 p.m." including a preposition representing a time with respect to the text message (step S715).

Thereafter, the controller 450 generates road guide information by using the name of a place included in the particular information based on the extracted particular information, and stores the generated road guide information in the storage unit 420. In this case, the generated road guide information may be generated in the form of a single image file including map data, and the like. Also, when a plurality of names of places are included in the extracted particular information, the controller 450 may generate road guide information regarding each of the plurality of the names of places, or may select the name of a place having a combination of continued words according to a syntax analysis, or the like, from among the plurality of the names of places (e.g., "Gangnam station" from among "Gangnam" and "Gangnam station") and generate road guide information regarding the selected name of the place (e.g., "Gangnam station").

For example, the controller 450 generates road guide information in the form of an image file (e.g., "gangnamstation.gif") including information such as information regarding the surroundings of Gangnam station, location information, and the like, by using the word "Gangnam station" included in the place name analysis results according to the natural language processing, and the map data stored in the storage unit 420.

In addition, the controller 450 displays the generated road guide information along with the text message on the display unit 460 and attach the generated road guide information as an enclosure file of the text message.

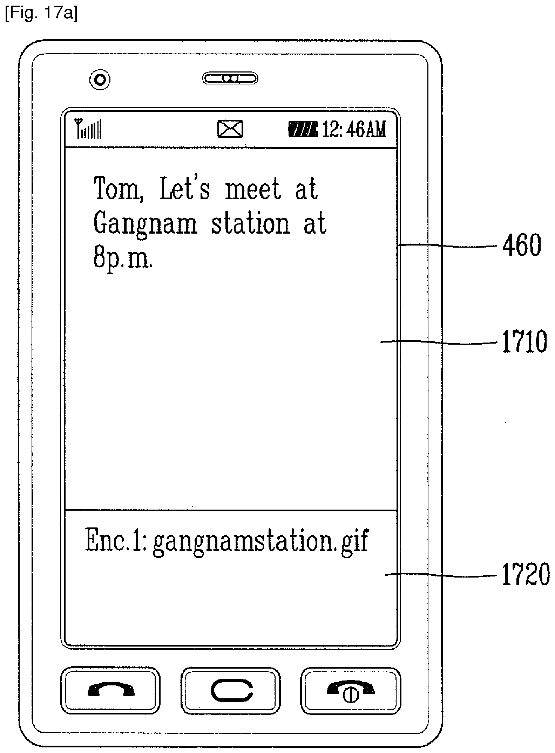

For example, as shown in FIG. 17A, the controller 450 displays (1710) the text message on a portion of the display unit 460 and attach (1720) the road guide information as an enclosure file of the text message on another portion of the display unit 460 (step S720).

Thereafter, the controller 450 generates alarm information by using the information regarding time included in the particular information based on the extracted particular information, and stores the generated alarm information in the storage unit 420. In this case, the generated alarm information may be generated in the form of a single file (e.g., "alarm.dat") including time information.

For example, by using "8" or "8 p.m." included in the time analysis results according to the natural language processing, the controller 450 may set an alarm based on "8" (or "8 p.m.") or generate alarm information based on 7:40 (or 7:40 p.m.) earlier by a certain time (e.g., 20 minutes) than "8" (or "8, p.m.").

In this case, when the time analysis results according to the natural language processing includes the word "8" the controller 450 may generate alarm information regarding a time closer to a current time based on the current time. Namely, when the time analysis results according to the natural language process include "8" and a current time is 3:00 a.m., the controller 450 may generate (or set) alarm information as "8:00 a.m." close to the current time. Also, when the time analysis results according to the natural language process include "8" and a current time is 2:00 p.m., the controller 450 may generate alarm information as "8:00 p.m." close to the current time.

In addition, the controller 450 attaches the generated alarm information as an enclosure file of the text message.

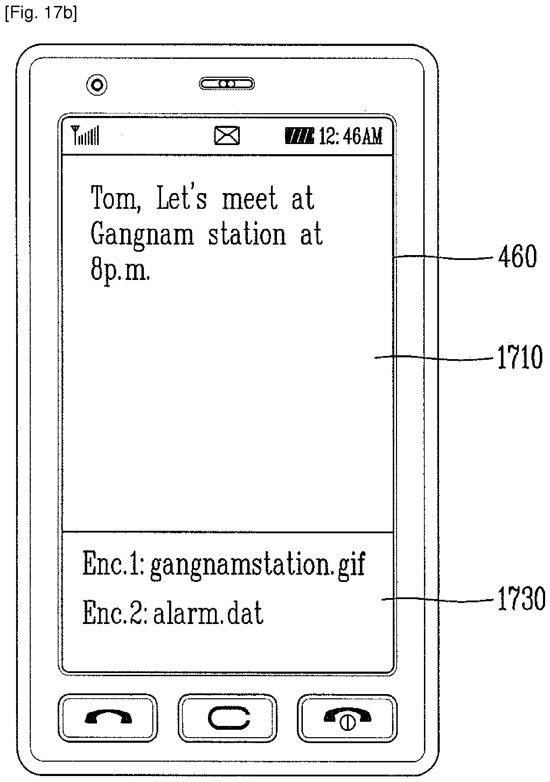

For example, as shown in FIG. 17B, the controller 450 may attach (1730) the generated alarm information as an enclosure file of the text message (step S725).

Thereafter, the controller 450 checks a speaker of the voice message which has undergone the natural language processing.

Namely, the controller 450 checks a speaker who has made a voice of the voice message (e.g., "Tom, Let's meet at Gangnam station at 8 p.m.") is a speaker of the mobile terminal 400 or a speaker of the second mobile terminal 500. In this case, the controller 450 stores the speaker model with respect to the speaker of the mobile terminal 400 (or respective speaker models corresponding to a plurality of mobile terminals) in the storage unit 420 and check (or discriminate) the speaker of each of the voice messages stored in the storage unit 420 by using the speaker models stored in the storage unit 420.

In addition, the controller 450 may generate a speaker model of each speaker by using the plurality of voice messages and check (or discriminate) the speaker of each of the voice messages stored in the storage unit 420 by using the generated speaker models (step S730).

When the speaker who has made a voice of the voice message is the speaker of the mobile terminal 400 according to the check results, the controller 450 searches for a phone number corresponding to the name included in the particular information among the names corresponding to the plurality of phone numbers stored in the storage unit 420 based on the extracted particular information.

For example, the controller 450 may search a phone number corresponding to the name "Tom" among a plurality of phone numbers stored in the storage unit 420 by using the word "Tom" included in the name analysis results according to the natural language processing.

In addition, when the terminals are connected for communication, the controller 450 may search for (or check) a phone number of the second mobile terminal 500 to or from which the voice message has been transmitted or received (step S735).

Thereafter, the controller 450 displays the phone number search results on the display unit 460. In this case, when a plurality of phone numbers correspond to the names according to the phone number search results, the controller 450 displays some or all of the plurality of phone numbers on the display unit 460. In addition, the phone number search results may include the phone number of the second mobile terminal 500 to and from which the voice message has been transmitted or received.

In addition, the controller 450 may display the text message corresponding to the voice-recognized voice message on the display unit 460 together.

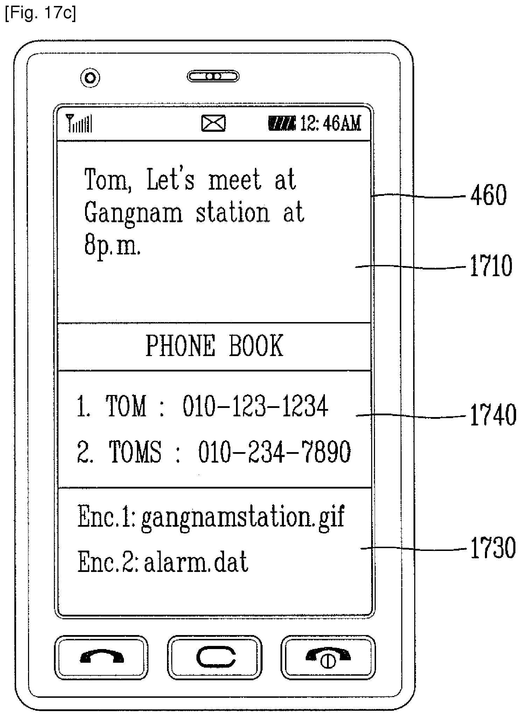

For example, as shown in FIG. 17C, the controller 450 displays phone number search results 1740 corresponding to the names, the results obtained by performing the natural language processing, among the names corresponding to the plurality of phone numbers stored in the storage unit 420, on a portion of the display unit 460 (S740).

Thereafter, when one of the phone numbers displayed on the display unit 460 is selected according to a user selection, the controller 450 transmits the text message corresponding to the voice message and/or one or more enclosure files to the second mobile terminal 500 corresponding to the selected phone number. Here, the one or more enclosure files may be additional information corresponding to the particular information. Namely, the additional information corresponding to the particular information may include at least one of the generated road guide information and the generated alarm information.

In addition, when the phone numbers displayed on the display unit 460 are not selected according to a user selection, the controller 450 may receive an additional phone number according to a user input and transmit the text message corresponding to the voice message and/or one or more enclosure files to the second mobile terminal 500 corresponding to the received phone number.

In addition, when a phone number corresponding to a name included in the extracted particular information is not searched according to the phone number search result, the controller 450 may receive an additional phone number according to a user input and transmit the text message corresponding to the voice message and/ore the one or more enclosure files to the second mobile terminal 500 corresponding to the received phone number (step S535).

In addition, the controller 450 may transmit a voice messages (in this case, it is generated in the form of a voice file (e.g., "meet.mp3")) corresponding to the text message along with the one or more enclosure files, instead of the text message, to the second mobile terminal 500 (step S745).

Thereafter, the controller 450 checks the set alarm time, and when the alarm time arrives, the controller 450 performs the alarm function of the mobile terminal 400.

In addition, the controller 450 may display the road guide information stored in the storage unit 420 on the display unit 460.

In addition, the controller 450 checks location information of the mobile terminal 400 via the GPS receiver 430, performs route searching based on the checked current location (e.g., a start point) of the mobile terminal 400 and the name of the place (e.g., a destination) included in the extracted particular information, and displays route search results according to the route searching on the display unit 460.

In addition, when the alarm function is performed, the controller 450 may display the road guide information stored in the storage unit 420 on the display unit 460.

In addition, when the alarm function is performed, the controller 450 checks location information of the mobile terminal 400 via the GPS receiver 430, and performs route searching based on the checked current location (e.g., a start point) of the mobile terminal 400 and the name of the place (e.g., a destination) included in the extracted particular information.

For example, the controller 450 checks the location information of the mobile terminal 400 via the GPS receiver 430 and searches a route between the checked current location (e.g., the start point) of the mobile terminal 400 and "Gangnam station" (e.g., a destination) included in the place name analysis results according to the natural language processing.

Thereafter, the controller 450 displays the generated road guide information or the route search results according to the route searching on the display unit 460 (step S750).

In addition, when the speaker who has made a voice of the voice message according to the check results in step S730 is the speaker of the second mobile terminal 500, the controller 450 performs step S750 (step S755).

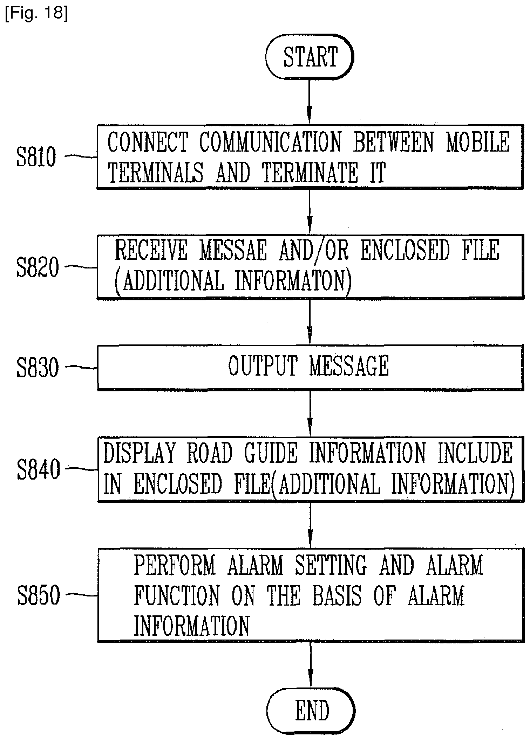

FIG. 18 is a flow chart showing the process of a control method of a mobile terminal according to an eighth exemplary embodiment.

First, the second communication unit 580 included in the second mobile terminal 500 transmits and receives various messages including a voice message, a text message, a control signal, and the like, through the mobile terminal 400 connected for communication. In this case, the second communication unit 580 may be connected with the second mobile terminal 500 via (or by way of) one or more servers 610, one or more base stations 620, or the like, positioned between the second mobile terminal 500 and the mobile terminal 400.

Thereafter, when communication connection with the mobile terminal 400 is terminated, the second mobile terminal 500 maintains a standby state (step S810).

Thereafter, the second communication unit 580 receives a text message or a voice message transmitted from the mobile terminal 400.

In addition, in receiving the message, the second communication unit 580 may receive additional information transferred along with the message. Here, the additional information may include at least one of road guide information and alarm information (step S820).

Thereafter, when the text message is received, the second controller 550 signal-processes the received text message and display content included in the signal-processed text message on the second display unit 560.

In addition, when a voice message is received, the second controller 550 signal-processes the received voice message and outputs content included in the signal-processed voice message to the second voice output unit 570 (step S830).

Thereafter, the second controller 550 signal-processes the road guide information included in the received additional information and displays the signal-processed road guide information on the second display unit 560. In this case, when a pre-set button (not shown) is selected by the user in a state in which the received message is displayed on the second display unit 560, or the state in which the received message is displayed on the second display unit 560 is maintained for a pre-set time, the second controller 550 may display the road guide information related to the received message on the second display unit 560. Also, in the state in which the received message is displayed on the second display unit 560, the second controller 550 may divide the display area of the second display unit 560, display the received message on a first area among the divided areas, and display the received road guide information on a second area among the divided areas (step S840).

Thereafter, the second controller 550 signal-processes alarm information included in the received additional information and sets an alarm function of the second mobile terminal 500 based on the signal-processed alarm information.

Thereafter, the second controller 550 checks the set alarm time, and when the alarm time arrives, the second controller 550 performs the alarm function of the second mobile terminal 500 (step S850).

As the present disclosure may be embodied in several forms without departing from the characteristics thereof, it should also be understood that the above-described embodiments are not limited by any of the details of the foregoing description, unless otherwise specified, but rather should be construed within its scope as defined in the appended claims.

## Claims

1. A method for controlling a mobile terminal, the method comprising:
performing (S505) a voice recognition on a voice message transmitted or received between the mobile terminal and a counterpart that transmitted or received the voice message;
recognizing a speaker of the voice message of each speaker corresponding to voice recognition results with respect to the voice message;
extracting (S515) information including a person's name, name of place and time from the voice message;
generating road guide information based on the name of place included in the extracted information; and
executing a function among one or more functions related to the road guide information based on the speaker of the voice message;
wherein the method further comprises :
when the speaker of the voice message of each speaker corresponding to the voice recognition results is a speaker of the mobile terminal, searching (S525) for a phone number corresponding to the person's name included in the voice message among names corresponding to a plurality of stored phone numbers and transmitting (S535) a text message corresponding to the voice message to the phone number and displaying the road guide information on a display (S545) unit of the mobile terminal, and
when the speaker of the voice message of each speaker corresponding to the voice recognition results is a speaker of the counterpart, performing (S555) a route searching using a current location of the mobile terminal and the name of the place included in the extracted information and displaying (S560) results of the route searching on a display unit of the mobile terminal.

2. The method of claim 1, wherein, in the extracting the information, the information is extracted by performing natural language processing on the voice message.

3. The method of claim 2, wherein the road guide information is generated based on the name of the place included in the voice message.

4. The method of claim 3, wherein the transmitting of the text message further comprises:
searching for more phone numbers corresponding to the person's name included in the voice message among names corresponding to a plurality of stored phone numbers;
displaying the more phone numbers corresponding to more names included in the phone number search results on the display unit; and
when one of the more phone numbers is selected, transmitting the message to the selected phone number.

5. A mobile terminal comprising:
a storage unit (420) configured to store a voice message transmitted or received between the mobile terminal and another mobile terminal; and
a controller (450) configured to:
perform a voice recognition on the voice message stored in the storage unit;
recognize a speaker of the voice message of each speaker corresponding to voice recognition results with respect to the voice message;
extract information including a person's name, name of place and time from the voice message;
generate road guide information based on the name of place included in the extracted information; and
execute a function among one or more functions related to the road guide information based on the speaker of the voice message;
wherein the controller is further configured to :
search for a phone number corresponding to the person's name included in the voice message among names corresponding to a plurality of stored phone numbers and transmit a text message corresponding to the voice message to the phone number and display the road guide information on a display unit of the mobile terminal when the speaker of the voice message of each speaker corresponding to the voice recognition results is a speaker of the mobile terminal, and
perform a route searching function using a current location of the mobile terminal and the name of place included in the extracted information and display results of the route searching function on a display unit of the mobile terminal when the speaker of the voice message of each speaker corresponding to the voice recognition results is a speaker of the another mobile terminal.

6. The mobile terminal of claim 5, wherein the controller extracts the information included in the voice message by performing natural language processing on the message.

7. The mobile terminal of claim 6, wherein the road guide information is generated based on the name of the place included in the voice message.

8. The mobile terminal of claim 7, wherein the controller searches for more phone numbers corresponding to the person's name included in the voice message among names corresponding to a plurality of stored phone numbers, and displays the more phone numbers corresponding to the more names included in the phone number search results on the display unit.

9. The mobile terminal of claim 8, wherein when one of the more phone numbers is selected, the controller transmits the text message to the selected phone number via a communication unit.

## Patentansprüche

1. Verfahren zum Steuern eines mobilen Endgeräts, wobei das Verfahren aufweist:
Durchführen (S505) einer Spracherkennung an einer Sprachnachricht, die zwischen dem mobilen Endgerät und einem Gegenstück gesendet oder empfangen wird, das die Sprachnachricht gesendet oder empfangen hat;
Erkennen eines Sprechers der Sprachnachricht jedes Sprechers entsprechend Spracherkennungsergebnissen bezüglich der Sprachnachricht;
Extrahieren (S515) von Informationen, einschließlich eines Namens einer Person, eines Ortsnamens und der Zeit aus der Sprachnachricht;
Erzeugen von Straßenführungsinformationen beruhend auf dem Ortsnamen, der in den extrahierten Informationen enthalten ist; und
Ausführen einer Funktion aus einer oder mehreren Funktionen hinsichtlich der Straßenführungsinformationen beruhend auf dem Sprecher der Sprachnachricht;
wobei das Verfahren ferner aufweist:
wenn der Sprecher der Sprachnachricht jedes Sprechers entsprechend den Spracherkennungsergebnissen ein Sprecher des mobilen Endgeräts ist, Suchen (S525) nach einer Telefonnummer, die dem Namen einer Person entspricht, der in der Sprachnachricht enthalten ist, aus Namen, die mehreren gespeicherten Telefonnummern entsprechen, und Senden (S535) einer Textnachricht, die der Sprachnachricht entspricht, an die Telefonnummer und Anzeigen der Straßenführungsinformationen auf einer Anzeigeeinheit (S545) des mobilen Endgeräts, und
wenn der Sprecher der Sprachnachricht jedes Sprechers entsprechend den Spracherkennungsergebnissen ein Sprecher des Gegenstücks ist, Durchführen (S555) einer Routensuche unter Verwendung eines gegenwärtigen Standorts des mobilen Endgeräts und des Ortsnamens, der in den extrahierten Informationen enthalten ist, und Anzeigen (S560) von Ergebnissen der Routensuche auf einer Anzeigeeinheit des mobilen Endgeräts.

2. Verfahren nach Anspruch 1, wobei beim Extrahieren der Informationen die Informationen durch Durchführen einer Verarbeitung natürlicher Sprache an der Sprachnachricht extrahiert werden.

3. Verfahren nach Anspruch 2, wobei die Straßenführungsinformationen beruhend auf dem Ortsnamen erzeugt werden, der in der Sprachnachricht enthalten ist.

4. Verfahren nach Anspruch 3, wobei das Senden der Textnachricht ferner aufweist:
Suchen nach mehreren Telefonnummern, die dem Namen einer Person entsprechen, die in der Sprachnachricht enthalten ist, aus Namen, die mehreren gespeicherten Telefonnummern entsprechen;
Anzeigen der mehreren Telefonnummern, die mehreren Namen entsprechen, die in den Telefonnummer-Suchergebnissen enthalten sind, auf der Anzeigeeinheit; und
wenn eine der mehreren Telefonnummern ausgewählt wird, Senden der Nachricht an die ausgewählte Telefonnummer.

5. Mobiles Endgerät, das aufweist:
eine Speichereinheit (420), die konfiguriert ist, eine Sprachnachricht zu speichern, die zwischen dem mobilen Endgerät und einem anderen mobilen Endgerät gesendet oder
empfangen wird; und
eine Steuereinrichtung (450), die konfiguriert ist:
eine Spracherkennung an der in der Speichereinheit gespeicherten Sprachnachricht durchzuführen;
einen Sprecher der Sprachnachricht jedes Sprechers entsprechend Spracherkennungsergebnissen bezüglich der Sprachnachricht zu erkennen;
Informationen einschließlich eines Namens einer Person, eines Ortsnamens und der Zeit aus der Sprachnachricht zu extrahieren;
Straßenführungsinformationen beruhend auf dem Ortsnamen zu erzeugen, der in den extrahierten Informationen enthalten ist; und
eine Funktion aus einer oder mehreren Funktionen hinsichtlich der Straßenführungsinformationen beruhend auf dem Sprecher der Sprachnachricht auszuführen;
wobei die Steuereinrichtung ferner konfiguriert ist:
nach einer Telefonnummer, die dem Namen einer Person entspricht, der in der Sprachnachricht enthalten ist, aus Namen zu suchen, die mehreren gespeicherten Telefonnummern entsprechen, und eine Textnachricht, die der Sprachnachricht entspricht, an die Telefonnummer zu senden und die Straßenführungsinformationen auf einer Anzeigeeinheit des mobilen Endgeräts anzuzeigen, wenn der Sprecher der Sprachnachricht jedes Sprechers entsprechend den Spracherkennungsergebnissen ein Sprecher des mobilen Endgeräts ist, und
eine Routensuchfunktion unter Verwendung eines gegenwärtigen Standorts des mobilen Endgeräts und des Ortsnamens durchzuführen, der in den extrahierten Informationen enthalten ist, und Ergebnisse der Routensuchfunktion auf einer Anzeigeeinheit des mobilen Endgeräts anzuzeigen, wenn der Sprecher der Sprachnachricht jedes Sprechers entsprechend den Spracherkennungsergebnissen ein Sprecher des anderen mobilen Endgeräts ist.

6. Mobiles Endgerät nach Anspruch 5, wobei die Steuereinrichtung die Informationen, die in der Sprachnachricht enthalten sind, durch Durchführen einer Verarbeitung natürlicher Sprache an der Nachricht extrahiert.

7. Mobiles Endgerät nach Anspruch 6, wobei die Straßenführungsinformationen beruhend auf dem Ortsnamen erzeugt werden, der in der Sprachnachricht enthalten ist.

8. Mobiles Endgerät nach Anspruch 7, wobei die Steuereinrichtung nach mehreren Telefonnummern sucht, die dem Namen einer Person entsprechen, der in der Sprachnachricht enthalten ist, aus Namen, die mehreren gespeicherten Telefonnummern entsprechen, und die mehreren Telefonnummern, die den mehreren Namen entsprechen, die in den Telefonnummer-Suchergebnissen enthalten sind, auf der Anzeigeeinheit anzeigt.

9. Mobiles Endgerät nach Anspruch 8, wobei, wenn eine der mehreren Telefonnummern ausgewählt ist, die Steuereinrichtung die Textnachricht an die ausgewählte Telefonnummer über eine Kommunikationseinheit sendet.

## Revendications

1. Procédé de commande d'un terminal mobile, ledit procédé comprenant :
l'exécution (S505) d'une reconnaissance vocale dans un message vocal transmis ou reçu entre le terminal mobile et un homologue ayant transmis ou reçu le message vocal ;
la reconnaissance d'un locuteur du message vocal parmi tous les locuteurs correspondant aux résultats de reconnaissance vocale relatifs au message vocal ;
l'extraction (S515) d'informations comprenant un nom de personne, un nom de lieu et l'heure du message vocal ;
la génération d'informations de guidage routier sur la base du nom de lieu compris dans les informations extraites ; et
l'exécution d'une fonction parmi une ou plusieurs fonctions relatives aux informations de guidage routier sur la base du locuteur du message vocal ;
ledit procédé comprenant en outre :
si le locuteur du message vocal parmi tous les locuteurs correspondant aux résultats de reconnaissance vocale est un locuteur de terminal mobile, la recherche (S525) d'un numéro de téléphone correspondant au nom de personne compris dans le message vocal entre des noms correspondant à une pluralité de numéros de téléphone stockés et la transmission (S535) d'un message texte correspondant au message vocal au numéro de téléphone, et l'affichage des informations de guidage routier sur une unité d'écran (S545) du terminal mobile, et,
si le locuteur du message vocal parmi tous les locuteurs correspondant aux résultats de reconnaissance vocale est un locuteur de l'homologue, l'exécution (S555) d'une recherche de route au moyen d'une localisation actuelle du terminal mobile et du nom du lieu compris dans les informations extraites et l'affichage (S560) des résultats de la recherche de route sur une unité d'écran de terminal mobile.

2. Procédé selon la revendication 1, où, lors de l'extraction des informations, les informations sont extraites en appliquant un traitement de traitement de langage naturel sur le message vocal.

3. Procédé selon la revendication 2, où les informations de guidage routier sont générées sur la base du nom du lieu compris dans le message vocal.

4. Procédé selon la revendication 3, où la transmission du message texte comprend en outre :
la recherche de plusieurs numéros de téléphone correspondant au nom de personne compris dans le message vocal entre des noms correspondant à une pluralité de numéros de téléphone stockés ;
l'affichage des plusieurs numéros de téléphone correspondant à plusieurs noms compris dans les résultats de recherche de numéro de téléphone sur l'unité d'écran ; et,
si un numéro parmi les plusieurs numéros de téléphone est sélectionné, la transmission du message au numéro de téléphone sélectionné.

5. Terminal mobile, comprenant :
une unité de mémorisation (420) prévue pour mémoriser un message vocal transmis ou reçu entre le terminal mobile et un autre terminal mobile ; et
un contrôleur (450) prévu pour :
exécuter une reconnaissance vocale sur le message vocal stocké dans l'unité de mémorisation ;
reconnaître un locuteur du message vocal parmi tous les locuteurs correspondant aux résultats de reconnaissance vocale relatifs au message vocal ;
extraire des informations comprenant un nom de personne, un nom de lieu et l'heure du message vocal ;
générer des informations de guidage routier sur la base du nom de lieu compris dans les informations extraites ; et
exécuter une fonction parmi une ou plusieurs fonctions relatives aux informations de guidage routier sur la base du locuteur du message vocal ;
le contrôleur étant en outre prévu pour :
rechercher un numéro de téléphone correspondant au nom de personne compris dans le message vocal parmi des noms correspondant à une pluralité de numéros de téléphone stockés, transmettre un message texte correspondant au message vocal au numéro de téléphone, et afficher les informations de guidage routier sur une unité d'écran de terminal mobile si le locuteur du message vocal parmi tous les locuteurs correspondant aux résultats de reconnaissance vocale est un locuteur de terminal mobile, et
exécuter une fonction de recherche de route au moyen d'une localisation actuelle de terminal mobile et du nom de lieu compris dans les informations extraites, et afficher les résultats de la fonction de recherche de route sur une unité d'écran de terminal mobile si le locuteur du message vocal parmi tous les locuteurs correspondant aux résultats de reconnaissance vocale est un locuteur de l'autre terminal mobile.

6. Terminal mobile selon la revendication 5, où le contrôleur extrait les informations comprises dans le message vocal en exécutant le traitement de langage naturel sur le message.

7. Terminal mobile selon la revendication 6, où les informations de guidage routier sont générées sur la base du nom du lieu compris dans le message vocal.

8. Terminal mobile selon la revendication 7, où le contrôleur recherche plusieurs numéros de téléphone correspondant au nom de personne compris dans le message vocal parmi des noms correspondant à une pluralité de numéros de téléphone stockés, et affiche les plusieurs numéros de téléphone correspondant aux plusieurs noms compris dans les résultats de recherche de numéro de téléphone sur l'unité d'écran.

9. Terminal mobile selon la revendication 8, où, si un des plusieurs numéros de téléphone est sélectionné, le contrôleur transmet le message texte au numéro de téléphone sélectionné par l'intermédiaire d'une unité de communication.
